# EUROPÄISCHE PATENTSCHRIFT

(11) **EP 2 098 850 B1**
(45) Veröffentlichungstag und Bekanntmachung des Hinweises auf die Patenterteilung: **18.05.2016**
(21) Anmeldenummer: 09002845.7
(22) Anmeldetag: 27.02.2009
(51) Int. Cl.: G01M 17/007

(54) **Anordnung zur Simulation von Aufprallunfällen**
Device for simulation the impact of a crash
Dispositif simulant l'impact d'un accident

(30) Priorität: 27.02.2008 DE 102008011356
(43) Veröffentlichungstag der Anmeldung: 09.09.2009
(73) Patentinhaber: Hochschule Kaiserslautern, 66482 Zweibrücken (DE); Hochschule Fresenius, 65510 Idstein (DE)
(72) Erfinder: Gäng, Lutz-Achim, 74081 Heilbronn (DE); Klein, Frank, 66793 Saarwellingen (DE); Münch, Peter-Michael, 57620 Goetzenbruck (FR); Felder, Hanno, 66123 Saarbrücken (DE)
(74) Vertreter: Patentanwälte Dr. Keller, Schwertfeger

(56) Entgegenhaltungen:
- EP-A2- 0 994 338
- DE-A1- 10 050 080
- DE-A1- 10 107 016
- DE-A1-102005 042 260
- US-A1- 2008 148 878

## Beschreibung

Die Erfindung betrifft eine Anordnung zur Simulation von Aufprallunfällen gemäß dem Oberbegriff des Patentanspruchs 1.

Sinn und Zweck gattungsgemäßer Anordnungen ist die Untersuchung des Verhaltens von Kraftfahrzeugen und deren Insassen bei Aufprallunfällen. Bei derartigen Simulationen werden die Fahrzeuginsassen durch Dummys ersetzt, die bei einem Unfall menschenähnliches Bewegungsverhalten zeigen. Durch an den Dummys angeordnete Sensoren werden dann Beschleunigungs- und Aufprallkräfte während einer Unfallsimulation ermittelt. Mit Hilfe von Hochgeschwindigkeitskameras werden zusätzlich die Bewegungsabläufe festgehalten.

Zur Optimierung der Kraftfahrzeuge und deren Sicherheitsausrüstung im Hinblick auf ein möglichst geringes Verletzungsrisiko ist es von großer Bedeutung, dass die Unfallsimulation stets mit gleichen Ausgangsparametern nachgestellt wird, das heißt, dass die äußeren Rahmenbedingungen, die Einfluss auf eine mögliche Verletzung nehmen können, von Versuch zu Versuch möglichst konstant sind. Durch Variation einzelner Ausgangsparameter lässt sich so anhand der ermittelten Messwerte Ursache und Wirkung bestimmter Maßnahmen eindeutig zuordnen.

Die Erfindung betrifft neben der Simulation von Aufprallunfällen insbesondere eine Anordnung zur Simulation von Auffahrunfällen, die bei den Fahrzeuginsassen fast immer ein Schleudertrauma nach sich ziehen. Bisher ist man davon ausgegangen, dass eine durch den rückwärtigen Aufprall bedingte Extensionsbewegung des Kopfes der Grund für das Schleudertrauma ist mit der Folge, dass Sicherheitssysteme für die Fahrzeuginsassen auf Basis dieser Annahme entwickelt worden sind.

Es hat sich jedoch im Zuge der Erfindung herausgestellt, dass zur Extensionsbewegung des Kopfes zusätzlich eine Dreh- und Taumelbewegung hinzukommt, die in der Bewegungsüberlagerung zu einer Überdehnung der oberen wirbelnahen Nackenmuskulatur führt und so ein Schleudertrauma auslöst. Derzeitige Prüfstände sind nicht in der Lage, derartig komplexe Bewegungsabläufe während eines Auffahrunfalls zu simulieren, was die Weiterentwicklung vorhandener Sicherheitssysteme stark behindert.

Bekannt sind Prüfstände DE 102005042260, DE10107016, DE10050080 zur Simulation von Frontal- oder Auffahrunfällen mit einer Schlittenanlage, auf der die für die Simulation wesentlichen Komponenten montiert sind. Je nachdem, welche Art von Unfall simuliert werden soll, wird der Schlitten auf eine vorbestimmte Geschwindigkeit beschleunigt und abrupt abgebremst oder aus dem Stand plötzlich beschleunigt. Zur Simulation von typischen oder fahrzeugspezifischen Unfallsituationen werden vorgegebene oder am Fahrzeug gemessene Geschwindigkeits-und/oder Beschleunigungsverläufe verwendet und von der Schlittenbahn in einem gewissen zugelassenem Abweichungsbereich nachgefahren, denen folglich der Dummy auf dem Prüfstand ausgesetzt ist.

Bei der Simulation von rückwärtigen Auffahrunfällen wird in der Regel kein Fahrzeug gecrasht, sondern auf dem Schlitten ein kompletter Fahrzeugsitz mit darauf angebrachtem Dummy in einer genau definierten Lage eingerichtet und montiert. Der Dummy entspricht einer Nachbildung des gesamten menschlichen Körpers und ist an allen relevanten Teilen mit Beschleunigungs- und Aufprallsensoren ausgerüstet, deren Messwerte an eine Datenverarbeitungsanlage übermittelt werden.

Dabei hat sich zunächst als Nachteil erwiesen, dass das Einstellen des Sitzes sowie das Einbringen und Fixieren des Dummys vor Beginn der Unfallsimulation eine kraft- und vor allem zeitaufwändige Einsetzprozedur erforderlich macht. Es kann daher nur eine geringe Anzahl von Simulationen innerhalb einer bestimmten Zeit durchgeführt werden. Hinzu kommt, dass das Fixieren des Dummys in der Sollposition aufgrund der losen Verbindung mit dem Fahrzeugsitz nur in einem gewissen Toleranzbereich möglich ist. Aufgrund der sich dadurch von Versuch zu Versuch einstellenden Abweichungen der Ausgangsposition des Dummys ergeben sich verhältnismäßig große Streuungen im Simulationsergebnis, so dass gesicherte Aussagen über Ursache und Wirkung verschiedener Ausgangsparameter auf das Endergebnis nur in weiten Grenzen möglich sind.

Vor diesem Hintergrund besteht die Aufgabe der Erfindung darin, einen Prüfstand zur Simulation von Aufprallunfällen anzugeben, der in der Lage ist, einen Unfall möglichst realitätsgetreu und mit großer Wiederholgenauigkeit nachzustellen. Zudem soll durch Variation der Ausgangsparameter ein möglichst großes Spektrum an Unfallarten simuliert werden können.

Diese Aufgaben werden durch eine Anordnung mit den Merkmalen des Patentanspruchs 1 gelöst.

Vorteilhafte Ausführungsformen ergeben sich aus den Unteransprüchen.

Der Grundgedanke der Erfindung besteht in der Reduktion des Dummys auf einen Teildummy, mit den für die Erfassung verletzungsrelevanter Bewegungs- und Kenndaten erforderlichen Teilen und Ersetzen der Restdummys durch eine Schlittenanlage mit einer Kinematik, die die zwei- oder dreidimensionale Bewegung des Restdummys während eines Unfalls simuliert. Die räumliche Kurve, die dabei eine erfindungsgemäße Anordnung mit dem darauf montierten Teildummy nachfährt, entspricht somit dem Crash-typischen Bewegungsablauf eines Dummys, der als Mittelwert aus einer Vielzahl konventioneller Unfallsimulationen gewonnen wird.

Ein erster Vorteil der Erfindung gegenüber dem Stand der Technik ergibt sich aus der extrem hohen Wiederholgenauigkeit bei Durchführung einer Vielzahl von Simulationen. Diese beruht zum einen darauf, dass der Dummy auf verletzungsrelevante Teile reduziert ist und somit Störeinflüsse aus dem Restdummy eliminiert sind. Zum anderen ist durch die Montage des Teildummys am Schlitten unter Zwischenschaltung einer Aktoreinheit infolge der exakt reproduzierbaren Bewegung des Schlittens und der Aktoreinheit eine stets in engem Toleranzbereich gleichbleibende Bewegung des Teildummys während der Simulation gewährleistet. So ist es möglich, durch Variation der Ausgangsparameter eine eindeutige Zuordnung von Ursache und Wirkung vorzunehmen, da die Streuung der im Versuch erhaltenen Kenndaten extrem niedrig ist. Dies ermöglicht eine zielgerichtete Optimierung bestehender oder neuartiger Sicherheitssysteme.

Der Teildummy entspricht der Nachbildung eines im Hinblick auf die durchzuführende Unfallsimulation relevanten Teils des menschlichen Körpers. Gegenüber Vollkörperdummys zeichnet sich ein Teildummy daher schon durch niedere Herstellkosten aus. Hinzu kommt, dass ein kleinerer und leichterer Teildummy besser handhabbar ist und daher leichter und schneller in Sollposition für die Simulation eingerichtet werden kann, als schwere und sperrige Dummys. Der sich daraus ergebende Vorteil liegt in der Möglichkeit innerhalb kurzer Zeit eine hohe Zahl von Simulationen in rascher Folge durchführen zu können, was nicht zuletzt die Überlegenheit der Erfindung auch im Hinblick auf einen wirtschaftlichen Betrieb dokumentiert.

Die räumliche Bewegungskurve des oberen Torsowirbels T1 während eines Unfalls wird erfindungsgemäß durch Überlagerung der linearen Primärbewegung des Schlittens mit den Sekundärbewegungen der Aktoreinheit nachgebildet. Zu diesem Zweck ist eine erfindungsgemäße Aktoreinheit in der Lage, sowohl translatorische als auch rotatorische Bewegungen in und um alle Raumachsen eines rechtwinkligen Koordinatensystems auszuführen. In Kombination mit der Schlittenbewegung ist es so möglich, jede Bewegung der Fahrzeuginsassen bei einem Unfall zu simulieren. Eine erfindungsgemäße Anordnung deckt somit alle erdenklichen Unfallsituationen ab und ist daher universell einsetzbar.

Im Hinblick auf die Simulation eines Auffahrunfalls ist von besonderem Interesse die Schlittenbewegung mit einer translatorischen Vertikalbewegung und gegebenenfalls mit einer rotativen Bewegung um eine horizontale Achse quer zur Schlittenbewegung sowie gegebenenfalls mit einer weiteren Rotation um eine vertikale Achse zu kombinieren. Daraus ergibt sich ein realitätsgetreues Nachfahren der Bewegung des oberen Torsowirbels T1 während eines Unfalls.

Von der Erfindung bevorzugt sind Aktoreinheiten mit einem oder mehreren Linearverstellern, mittels derer die Sekundärbewegung erzeugt wird. Als Linearversteller kommen pneumatisch oder hydraulisch betätigte Zylinderkolbeneinheiten, Spindeltriebe, Piezoelemente und dergleichen in Betracht. Diese können gemäß einer Ausführungsform der Erfindung biegesteif zwischen einem der Aktoreinheit zugehörigen Fuß und Tragelement angeordnet sein, woraus sich eine vertikale Hub- oder Senkbewegung des Tragelements gegenüber dem Fuß ergibt. Die Gesamtbewegung des Dummys setzt sich in diesem Fall aus einer Kombination zweier translatorischer Bewegungen zusammen. Der gleiche Effekt lässt sich mit einer anderen Ausführungsform erzielen, bei der Linearführungen die Bewegung des Tragelements gegenüber dem Fuß vorgeben und gelenkig mit Tragelement und Fuß verbundene Linearsteller die Bewegung des Tragelements erzeugen.

Eine Erweiterung der simulierten Bewegung durch zusätzliche Freiheitsgrade der Aktoreinheit kann beispielsweise durch zusätzliche Rotation des Tragelements um eine horizontale oder vertikale Achse erzeugt werden. Auf diese Weise ist beispielsweise ein Kippen des Dummys um eine horizontale und quer zur Bewegungsrichtung des Schlittens angeordnete Achse möglich. Die Schwenkachse kann dabei durch den Schwerpunkt des Tragelements verlaufen, so dass sich eine reine Rotationsbewegung der Tragelements ergibt oder außermittig angeordnet sein, woraus mit der Schwenkbewegung gleichzeitig eine translatorische Bewegung verbunden ist. Als Antrieb eignen sich auch hier Linearversteller.

Für eine lediglich zweidimensionale Bewegung des Dummys, die sowohl translatorisch als auch rotatorisch sein kann oder aus einer Kombination beider besteht, weist eine bevorzugte Ausführungsform der Erfindung drei Linearsteller auf, die gelenkig mit dem Fuß und dem Tragelement verbunden sind. Zusätzlich sind Fuß und Tragelement über Synchronisationsmittel miteinander verbunden, die die Bewegungen des Tragelements gegenüber dem Fuß nur in einer Ebene zulassen. Eine solche Ausführungsform der Erfindung zeichnet sich durch einen reduzierten technischen Aufwand bei hoher Wiederholgenauigkeit aus und eignet sich insbesondere für die Simulation von Auffahr- und Frontalunfällen.

Eine bevorzugte Ausführungsform der Erfindung beansprucht eine Aktoreinheit mit Freiheitsgraden in und um alle Raumachsen, bei der mittels im Kreis angeordneter und im Zickzack zwischen Fuß und Tragelement verlaufender Linearversteller eine Hexapodstruktur gebildet wird, die eine Simulation jeglicher Bewegungsabläufe gestattet und daher zum Nachstellen einer Vielzahl von Unfallarten geeignet ist.

Ein anderes, ebenfalls im Rahmen der Erfindung liegendes Wirkprinzip für eine Aktoreinheit sieht vor, das Tragelement und den Fuß über eine Zwangsführung miteinander zu verbinden. Dabei gibt die Kulisse der Zwangsführung die Bewegung des Tragelements gegenüber dem Fuß vor. Durch geeignete Wahl der Kulissen, gegebenenfalls auch bei einer Unparallelität der seitlichen Kulissen, lassen sich sowohl translatorische als auch rotatorische Bewegungsabläufe simulieren.

Um eine möglichst realitätsgetreue Wiedergabe der verletzungsrelevanten Bewegungsabläufe zu simulieren, ist in weiterer Ausbildung der Erfindung ein Dummy mit einer biofidelen Nachbildung der Halswirbelsäule vorgesehen. Darunter versteht man eine Wirbelsäulennachbildung, die sowohl in ihrer gegenständlichen als auch funktionellen Ausbildung dem natürlichen Vorbild weitestgehend gleicht. Eine solche Halswirbelsäule besitzt daher eigene Freiheitsgrade, die durch die Beschleunigung des Schlittens initiierte Bewegungen erlauben.

In Weiterbildung dieses Gedankens wird an der biofidelen Halswirbelsäule auch die dortige Muskulatur nachgebildet. Dies geschieht gemäß einer bevorzugten Ausführungsform der Erfindung durch längenveränderliche Elemente entlang der Halswirbelsäule. Mit einem derart ausgebildeten Dummy ist es möglich, die tatsächlichen Bewegungsabläufe zu ermitteln, die beispielsweise bei einem Auffahrunfall nicht nur in einer Extensionsbewegung bestehen, sondern zusätzlich noch eine Dreh- und Taumelbewegung des Kopfes aufweisen und häufig ursächlich für ein Schleudertrauma sind.

Zur Nachbildung der kurzen Nackenmuskulatur können die längenveränderlichen Elemente zwischen der Basis der Kopfnachbildung und den einzelnen Halswirbeln angeordnet sein. In einer technischen Umsetzung der Erfindung besitzen die längenveränderlichen Elemente einen elastischen länglichen Körper, vorzugsweise einen schlauchförmigen Körper, der sich durch Aufbringung einer Querdehnung, beispielsweise durch Beaufschlagung mit einem Druckmedium, verkürzt. Als Alternative können auch Piezoelemente oder hydraulisch oder pneumatisch angetriebene Zylinderkolbeneinheiten verwendet werden.

Die lange Nackenmuskulatur wird vorteilhafterweise von elastisch wirkenden Zugelementen verkörpert, deren Enden mittels eines Feder-Dämpfersystems verankert sind. Das Feder-Dämpfersystem ermöglicht es, ein naturgetreues Verhalten der künstlichen Nackenmuskulatur nachzubilden.

Auch wenn die in dieser Patentanmeldung beschriebene biofidele Nachbildung der Halswirbelsäule lediglich abhängig beansprucht ist, so wird dennoch darauf hingewiesen, dass die biofidele Nachbildung eine eigene, von der erfindungsgemäßen Anordnung zur Simulation eines Anprallunfalls unabhängige Erfindung darstellt und daher Gegenstand einer eigenen Patentanmeldung sein kann.

Der Antrieb für den Schlitten zur Simulation des Aufpralls wird bevorzugt von einem zweiten kollidierenden Schlitten oder einer schwingenden oder pendelnden Masse gebildet, da auf diese Weise ein sehr hoher Impuls übertragbar ist.

Alternativ hierzu sieht die Erfindung vor, den Antrieb durch einen mit dem Schlitten gekoppelten Synchronmotor zu bewirken. Mittels einer geeigneten Steuerung des Synchronmotors lassen sich auf diese Weise beliebige vorgegebene Impulskurven nachfahren, was den Einsatzbereich der Erfindung erheblich erweitert. Auch liegt eine Kombination der beiden Antriebarten im Rahmen der Erfindung.

Eine bevorzugte Ausführungsform der Erfindung sieht als Antrieb einen Linearmotor vor, der berührungslos den Schlitten entlang einer Führungsschiene beschleunigt. Die Führungsschiene kann dabei gleichzeitig zur Aufnahme der Statorpakete des Linearmotors dienen.

Eine Erweiterung der erfindungsgemäßen Anordnung in ihrer Funktionalität bietet das Vorsehen eines Bremsschlittens, auf den der Schlitten mit dem Dummy nach der Simulation des Aufpralls auffährt und somit ein reaktives Bremsen auf einen Auffahrunfall bzw. ein Auffahren auf ein vorausstehendes Fahrzeug simuliert.

Die Erfindung wird nachstehend anhand in den Zeichnungen dargestellter Ausführungsbeispiele näher erläutert. Dabei werden für in Struktur und Funktion gleiche oder gleichwirkende Merkmale unterschiedlicher Ausführungsformen gleiche Bezugszeichen verwendet. Es zeigt
- Fig. 1: eine Seitenansicht auf eine aus dem Stand der Technik bekannte Versuchsanordnung,
- Fig. 2: den prinzipiellen Aufbau und die Wirkungsweise einer erfindungsgemäßen Anordnung in einer Seitenansicht,
- Fig. 3: eine Schrägansicht einer erfindungsgemäßen Anordnung,
- Fig. 4: eine Teilseitenansicht der in Figur 3 dargestellten Anordnung,
- Fig. 5: eine Vorderansicht der in den Figuren 3 und 4 dargestellten Anordnung,
- Fig. 6: eine Schrägansicht auf die in Figur 3 dargestellte Anordnung im Bereich des Schlittens, der Aktoreinheit und des Dummys in größerem Maßstab,
- Fig. 7: eine Draufsicht auf den Verankerungsbereich der Zugelemente des Dummys ohne Bowdenzüge,
- Fig. 8: einen Schnitt durch den in Figur 7 dargestellten Verankerungsbereich entlang der dortigen Linie VIII - VIII,
- Fig. 9: eine Schrägansicht auf eine weitere Ausführungsform einer erfindungsgemäßen Anordnung ohne Darstellung des Verankerungsbereichs der Zugelemente,
- Fig. 10: einen Schnitt durch die in Figur 9 dargestellte Anordnung entlang der dortigen Linie X - X,
- Fig. 11: eine weitere Schrägansicht der in Figur 9 dargestellten Anordnung mit Darstellung des Verankerungsbereichs der Zugelemente,
- Fig. 12a: eine Schrägansicht auf die in Figur 9 gezeigte Aktoreinheit,
- Fig. 12b bis g: Seitenansichten der in Fig. 12 dargestellten Aktoreinheit in verschiedenen Betriebsstellungen,
- Fig. 13: eine Schrägansicht auf eine weitere Ausführungsform einer Aktoreinheit mit Teildummy,
- Fig. 14: eine Schrägansicht der in Figur 13 dargestellten Aktoreinheit,
- Fig. 15: eine Schrägansicht auf eine weitere Ausführungsform einer Aktoreinheit mit Zwangsführung,
- Fig. 16a: eine Seitenansicht auf eine Muskelnachbildung in gestreckter Stellung,
- Fig. 16b: eine Seitenansicht auf eine Muskelnachbildung in verkürzter Stellung und die
- Fig. 17a bis h: eine Abfolge von Seitenansichten auf eine erfindungsgemäße Anordnung während der Simulation eines Auffahrunfalls.

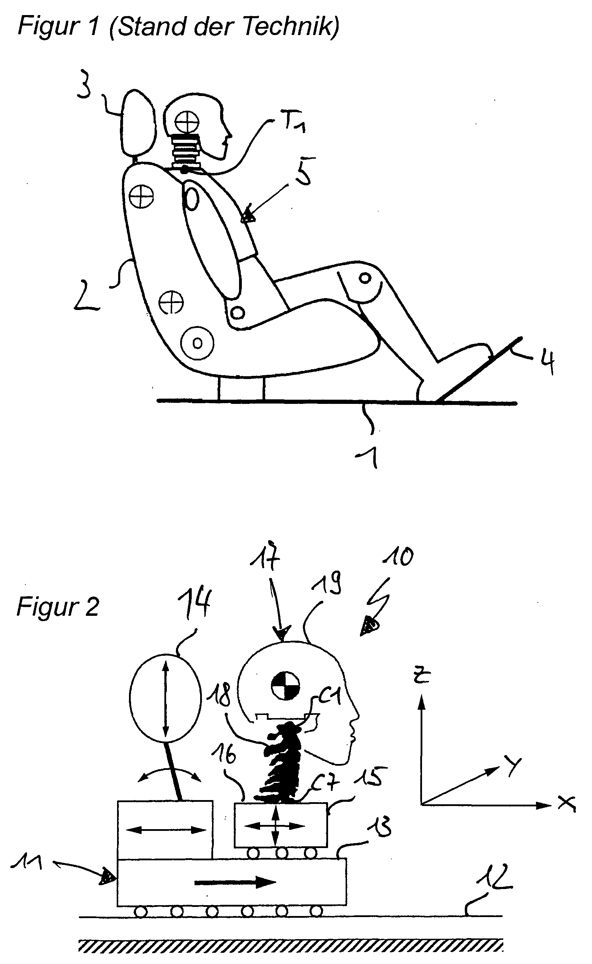

Fig. 1 zeigt eine Versuchsanordnung, wie sie aus dem Stand der Technik bekannt ist. Man sieht lediglich die mit einem Strich angedeutete Oberseite eines Schlittens 1, der zur Ausführung einer Translationsbewegung entlang einer nicht weiter dargestellten Schlittenbahn geeignet ist. Auf dem Schlitten 1 ist ein Sitz 2 mit Kopfstütze 3 und einer Fußauflagefläche 4 befestigt. Ein Dummy 5 sitzt auf dem Sitz 2 in einer einem Fahrzeuginsassen vergleichbaren Position. Der Dummy 5 ist vielgliedrig ausgebildet, wobei Gelenke zwischen den einzelnen Gliedern eine dem menschlichen Körper nachempfundene Bewegungsfreiheit geben sollen. Zudem ist der Dummy 5 mit nicht dargestellten Sensoren ausgestattet, die sowohl Beschleunigungs- und Aufprallkräfte, als auch Belastungen in den Bandscheiben während der Simulation eines Unfalls erfassen.

Vor Beginn der Simulation muss zunächst der Sitz 2 in eine mit einem Fahrzeugsitz in einem Kraftfahrzeug vergleichbare Position gebracht werden. Anschließend wird der Dummy 5 auf den Sitz 2 gesetzt und in die Ausgangsposition für die Simulation des Unfalls justiert.

Während solcher Unfallsimulation bewegt sich der Dummy 5 gegenüber dem Sitz 2 in seiner Gesamtheit auf unfalltypischen Bewegungsbahnen, die bei Durchführung mehrerer Versuche mit gleichen Ausgangsbedingungen zwar alle ähnlich sind, aber in einem großen Bereich streuen. Messergebnisse, die mit Hilfe der Simulation lediglich für einen Teilbereich, z.B. für die Halswirbelsäule, gewonnen werden sollen, sind daher mit dem Nachteil einer großen Streuung behaftet, da verletzungsrelevante Bewegungsabläufe des Teilbereichs aufgrund der Gesamtbewegung des Dummys stets unterschiedlich und daher nicht vergleichbar sind. Die Auswertung der Messergebnisse gestaltet sich daher schwierig, da nicht eindeutig ersichtlich ist, in welcher Weise bestimmte Ausgangsparameter das Ergebnis beeinflussen.

In Fig. 2 ist eine erfindungsgemäße Anordnung 10 zur Simulation von Aufprallunfällen in ihrem prinzipiellen Aufbau dargestellt. Der Anordnung 10 ist ein rechtwinkliges Koordinatensystem mit den Achsen X, Y und Z zugeordnet, wobei die X-Achse die Richtung der Bewegungsbahn des Schlittens vorgibt, die Y-Achse eine Richtung quer zur X-Achse in einer horizontalen Ebene und die Z-Achse eine Richtung quer zur X-Achse in einer vertikalen Ebene. Dieses Koordinatensystem gilt auch für die weiteren Figuren.

Die Anordnung 10 umfasst einen Schlitten 11, der in X-Richtung entlang einer Bahn 12 beschleunigbar ist. An seiner Oberseite 13 sieht man eine Kopfstütze 14, die zur Einstellung sowohl in der Höhe verstellbar als auch um eine horizontale Achse schwenkbar ist. Ferner ist auf der Oberseite 13 des Schlittens 11 eine Aktoreinheit 15 angeordnet, an deren Oberseite 16 ein Teildummy 17 befestigt ist. Der Teildummy 17 setzt sich im vorliegenden Beispiel im Wesentlichen aus einer Halswirbelsäule 18 und einem darauf sitzenden Kopf 19 zusammen.

Die Aktoreinheit 15 ermöglicht sowohl translatorische als auch rotatorische Bewegungen in und um die Raumachsen X, Y, Z eines rechtwinkligen Koordinatensystems des Teildummys 17 gegenüber dem Schlitten 11. Die absolute Bewegung des Teildummys 17, die der Bewegung der Halswirbelsäule und des Kopfes eines Insassen bei einem realen Unfall entspricht, besteht somit aus einer Überlagerung der Primärbewegung des Schlittens 11 entlang der Bahn 12 und der Sekundärbewegung des Teildummys 17 infolge der Bewegungen der Aktoreinheit 15.

Für die Simulation von Auffahrunfällen und deren Auswirkungen auf die Fahrzeuginsassen dient im vorliegenden Beispiel als Referenzpunkt der Schwerpunkt des oberen Torsowirbels T1 (siehe Figur 1), der die Halswirbelsäule 18 trägt. Dessen Bewegung und dessen Neigung während eines Unfalls ist aus einer Vielzahl konventioneller Unfallsimulationen bekannt, beispielsweise mit einem Aufbau gemäß Fig. 1. Durch Mittelung dieser Versuchsergebnisse ergibt sich eine weg- und zeitabhängige räumliche Kurve und Winkelstellung des oberen Torsowirbels T1, die charakteristisch für eine spezielle Unfallart ist.

Aufbauend auf dieser Erkenntnis liegt der Grundgedanke der Erfindung darin, diese Kurve und Neigung des oberen Torsowirbels T1 möglichst realitätsgetreu nachzufahren und dabei die verletzungsrelevanten Kenndaten aus dem Teildummy 17 zu gewinnen.

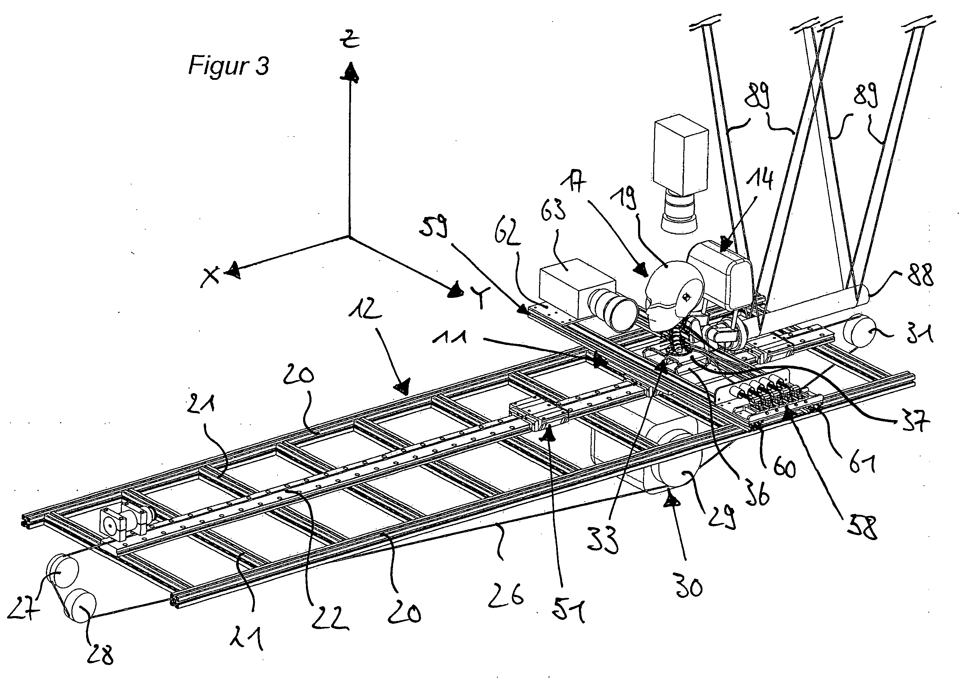

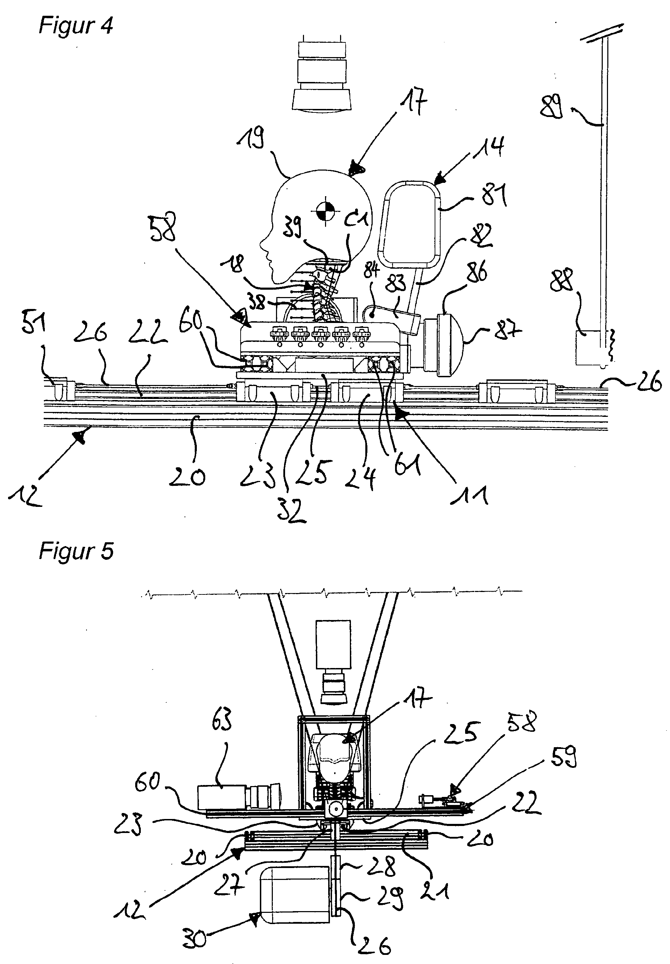

Die Fig. 3, 4 und 5 zeigen verschiedene Ansichten einer konkreten Umsetzung des in Fig. 2 beschriebenen Erfindungsprinzips. Man sieht eine Schlittenbahn 12, die sich zusammensetzt aus zwei in X-Richtung achsparallele Längsträger 20, die durch Querträger 21 in einheitlichen Abständen miteinander verbunden sind. Die Schlittenbahn 12 ruht auf einem gewöhnlichen Unterbau, der in den Zeichnungen nicht dargestellt ist.

An den Querträgern 21 ist achsparallel zu und mittig zwischen den Längsträgern 20 eine Führungsschiene 22 befestigt, auf der ein Schlitten 11 in X-Richtung zwangsgeführt ist. Der Schlitten 11 umfasst zwei Gleitstücke 23 und 24, die jeweils das Profil der Führungsschiene 22 formschlüssig umgreifen, so dass ein Abheben der Gleitstücke 23, 24 von der Führungsschiene 22 ausgeschlossen ist. Die Gleitstücke 23 und 24 sind in kurzem axialem Abstand zueinander angeordnet und über Verbindungsmittel 32 kraftschlüssig miteinander verbunden. Mit ihren Oberseiten tragen die Gleitstücke 23 und 24 eine gemeinsame Montageplatte 25, die die Basis für den weiteren Versuchsaufbau bildet.

Der Antrieb des Schlittens 11 besorgt ein unterhalb der Schlittenbahn 12 am Unterbau befestigter Synchronmotor 30, dessen Antriebsrad 29 in Eingriff mit einem Antriebsriemen 26 steht. Die Enden des Antriebsriemens 26 sind über die Umlenkrollen 27 und 28 an der vorderen Stirnseite des Gleitstücks 23 und über die Umlenkrolle 31 an die hintere Stirnseite des Gleitstücks 24 angeschlossen.

Durch Aktivierung des Synchronmotors 30 wird der Schlitten 11 entlang der Führungsschiene 22 bewegt. Über eine nicht weiter dargestellte Steuereinheit können dabei sowohl Geschwindigkeits- als auch Beschleunigungskurven durch Steuerung des Synchronmotors 30 auf den Schlitten 11 übertragen werden.

Auf der Oberseite der Montageplatte 25 ist ferner eine Aktoreinheit 33 mit ihrem blockförmigen Fuß 36 kraftschlüssig befestigt. Dem Fuß 36 liegt in vertikalem Abstand ein plattenförmiges Tragelement 37 gegenüber, das von einer zwischen Fuß 36 und Tragelement 37 agierenden Stelleinrichtung getragen ist (Figur 3). Die Stelleinrichtung umfasst allgemein Mittel, die geeignet sind, die relative Lage des Tragelements 37 gegenüber dem Fuß 36 zu verändern. Über eine nicht dargestellte Steuereinheit sind diese Mittel beispielsweise weg-, zeit- oder kraftabhängig steuerbar. Als bevorzugte Mittel kommen Linearversteller zum Einsatz, wie zum Beispiel pneumatische oder hydraulische Zylinderkolbeneinheiten, Piezoelemente, Spindeltriebe und dergleichen.

In den Fig. 3 bis 5 ist die Stelleinrichtung aufgrund der gewählten Perspektive nicht oder nur schwer erkennbar. Eine erste Möglichkeit für eine Stelleinrichtung besteht in einer Zylinderkolbeneinheit, die biegesteif zwischen Fuß 36 und Tragelement 37 angeordnet ist. Damit ist eine translatorische Bewegung des Tragelements 37 in Z-Richtung zum Heben und Senken des Teildummys 17 möglich.

Eine zweite Möglichkeit für eine Stelleinrichtung besteht beispielsweise in der Anordnung eines horizontalen Scharniergelenks zwischen Fuß 36 und Tragelement 37. Zusammen mit einer zusätzlichen Zylinderkolbeneinheit zwischen Fuß 36 und Tragelement 37 kann damit ein Schwenken des Tragelements 37 erreicht werden, um eine Nickbewegung des Teildummys 17 zu erzeugen.

Weitere nicht dargestellte Möglichkeiten der Stelleinrichtung bilden beispielsweise vertikale Längsführungen zwischen Fuß 36 und Tragelement 37, die über einen Exzenterantrieb in Z-Richtung gegeneinander verschiebbar sind.

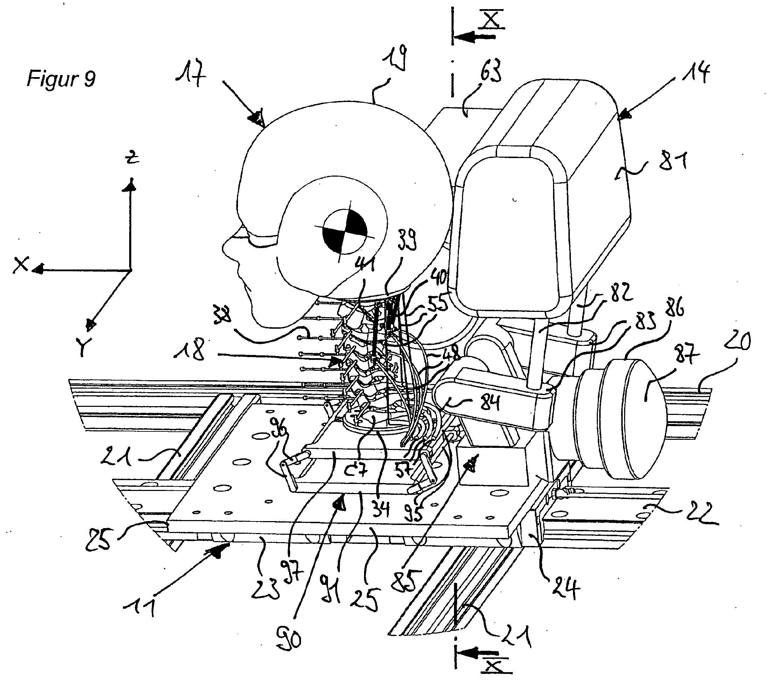

Von der Erfindung besonders bevorzugte Ausführungsformen für eine Stelleinrichtung werden später unter den Fig. 9 bis 15 näher beschrieben.

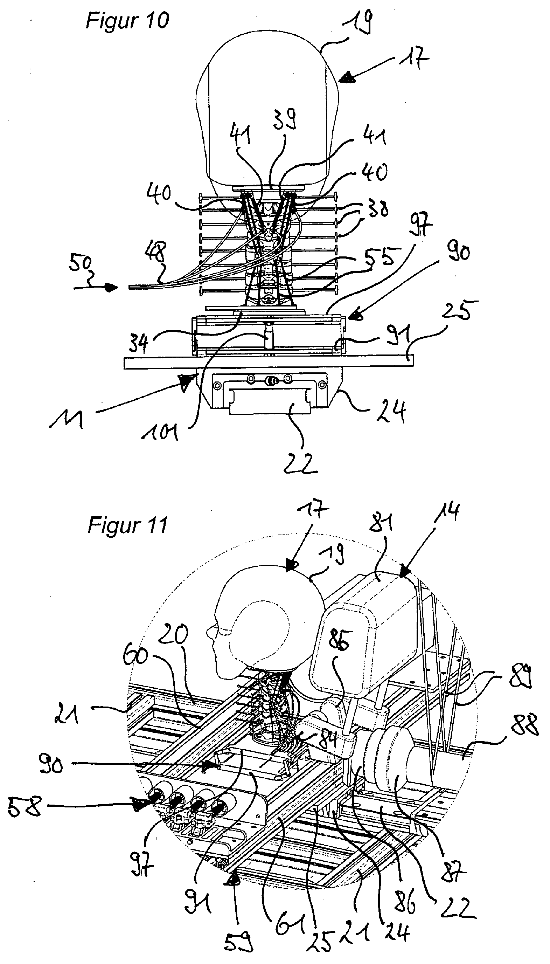

Auf dem Tragelement 37 der Aktoreinheit 33 ist ein Teildummy 17 kraftschlüssig befestigt. Die konstruktive Ausbildung des Teildummys 17 ist für alle unterschiedlichen Ausführungsformen der verschiedenen Ausführungsbeispiele gleich, so dass dieser nachfolgend anhand der Fig. 9 und 10 stellvertretend beschrieben wird.

Der Teildummy 17 besitzt eine biofidele Halswirbelsäulennachbildung 18, auf der eine Kopfnachbildung 19 sitzt. Die Halswirbelsäulennachbildung 18 weist von oben nach unten die Halswirbel C1 bis C7 auf, zwischen denen jeweils ein elastisches Material eingefügt ist, welches der menschlichen Bandscheiben vergleichbare Eigenschaften aufweist. In Längsrichtung der Halswirbelsäulennachbildung 18 sind die einzelnen Wirbel C1 bis C7 zug- und druckfest, aber gelenkig miteinander verbunden. Auf diese Weise besitzt die Halswirbelsäulennachbildung 18 ähnliche Bewegungsfreiheiten wie deren natürliches Vorbild. Stiftförmige Zeiger 38 in X-Richtung und Y-Richtung in den Halswirbeln dienen der Kenntlichmachung von Bewegungen.

Der obere Halswirbel C1 ist an der Basis 39 der Kopfnachbildung 19 befestigt und der untere Halswirbel C7 sitzt auf der Nachbildung 35 des oberen Torsowirbels T1, der mittels einer Grundplatte 34 starr mit der Oberseite des Tragelements 37 verbunden ist. Auf diese Weise wird eine Lageänderung des Tragelements 37 direkt auf den unteren Halswirbel C7 und damit die Halswirbelsäulennachbildung 18 übertragen, was sich auf den Bewegungsablauf des Teildummys 17 auswirkt.

Um ein realitätsgetreues Bewegungsverhalten des Teildummys 17 während der Unfallsimulation zu erhalten, ist in der erfindungsgemäßen Anordnung auch die Nackenmuskulatur künstlich nachgebildet. Dabei unterscheidet die Erfindung zwei Gruppen von Muskulatur. Zum Einen wird die kurze Nackenmuskulatur durch erste längenveränderliche Elemente 40 nachgebildet, die sich paarweise von der Basis 39 der Kopfnachbildung 19 zum oberen Halswirbel C1 erstrecken. Ein weiteres Paar längenveränderlicher Elemente 41 erstreckt sich von der Basis 39 der Kopfnachbildung 19 zum zweiten Halswirbel C2, wobei diese Elemente 41 einen schrägen Verlauf von oben außen nach unten innen aufweisen (auf Fig. 10).

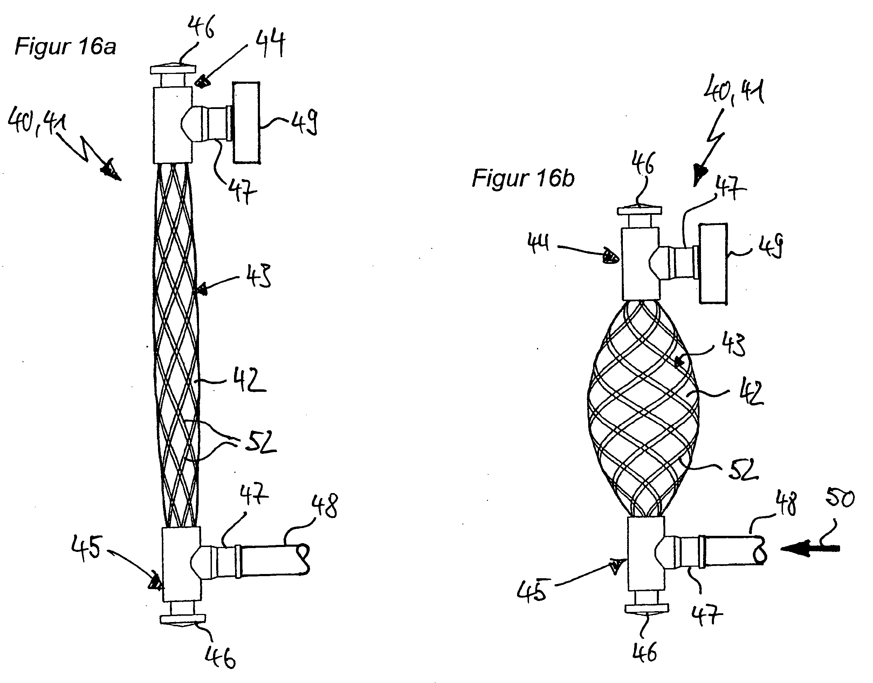

Der Aufbau der längenveränderlichen Elemente 40 und 41 ist aus den Fig. 16 a und 16 b ersichtlich, wobei Fig. 16 a ein solches Element 40, 41 in gestrecktem Zustand und Fig. 16 b in verkürztem, dem kontraktierenden Muskel entsprechenden Zustand zeigt.

Die längenveränderlichen Elemente 40 und 41 weisen einen elastischen Schlauchabschnitt 42 auf, der von einem Gewebe 43 umwickelt ist. Das Gewebe 43 besitzt zugfeste Fasern 52, die in lockerer Anordnung kreuzweise gelegt sind. Die Enden des Schlauchabschnitts 41 und des Gewebes 43 sind mit jeweils einer Kappe 44 und 45 verschlossen, an deren Ende wiederum Verankerungselemente 46 zur Befestigung der Elemente 40 und 41 an der Basis 39 des Kopfes 19 oder an den Halswirbeln C1 bzw. C2 angeordnet sind.

Die untere Kappe 45 weist ferner einen Anschluss 47 für eine Druckluftleitung 48 auf, die an einen nicht dargestellten Druckbehälter angeschlossen ist und den Schlauchabschnitt 42 mittels einer Steuer- und Regeltechnik mit Druckluft 50 beaufschlagt. Die obere Kappe 44 besitzt einen Anschluss 47, der in der Regel mit einem Drucksensor 49 verbunden ist.

Bei Beaufschlagung der Elemente 40 und 41 mit Druckluft 50 erfährt der Schlauchabschnitt 42 eine radiale Dehnung. Dabei folgen die deutlich weniger dehnbaren Gewebefasern 52 der radialen Bewegung des Schlauchabschnitts 42, was eine Verkürzung des axialen Abstands der Kappen 45 und 46 nach sich zieht und einer Kontraktion des künstlichen Muskels entspricht.

Der Druck innerhalb der Elemente 40 und 41 ist einerseits abhängig von der Druckluftbeaufschlagung und andererseits von der Bewegung des Teildummys 17 während der Simulation. Die Erfassung des vorhandenen Drucks über den Sensor 49 ist damit ein Maß für die entsprechende Muskelbeanspruchung des Teildummys 17 während der Unfallsimulation.

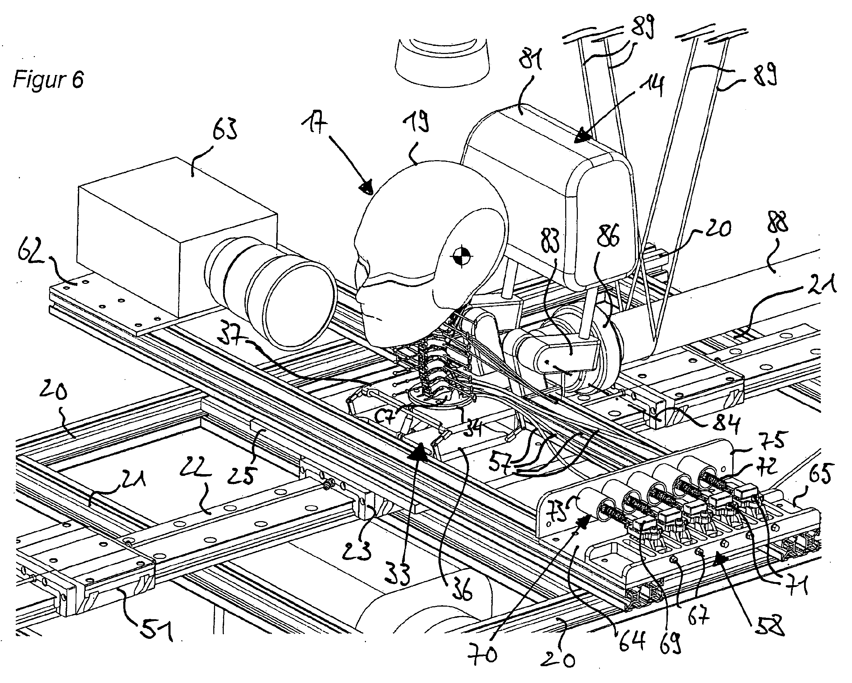

Die lange Nackenmuskulatur im Bereich der Halswirbelsäule wird von einer Gruppe zweiter längenveränderlicher Elemente 55 nachgebildet, die Zugseile umfassen, die an ihrem einen Ende an der Basis 39 des Kopfes 19 verankert sind und geradlinig (Fig. 9) oder mit Umlenkung im Bereich der Halswirbel C3/C4 zur Platte 34 geführt sind und dort nach Umlenkung in eine horizontale Richtung in einem Verankerungsbereich 58 enden. Dabei sind die längenveränderlichen Elemente 55 wenigstens in einem Teilabschnitt als Bowdenzüge 57 gebildet (Fig. 6).

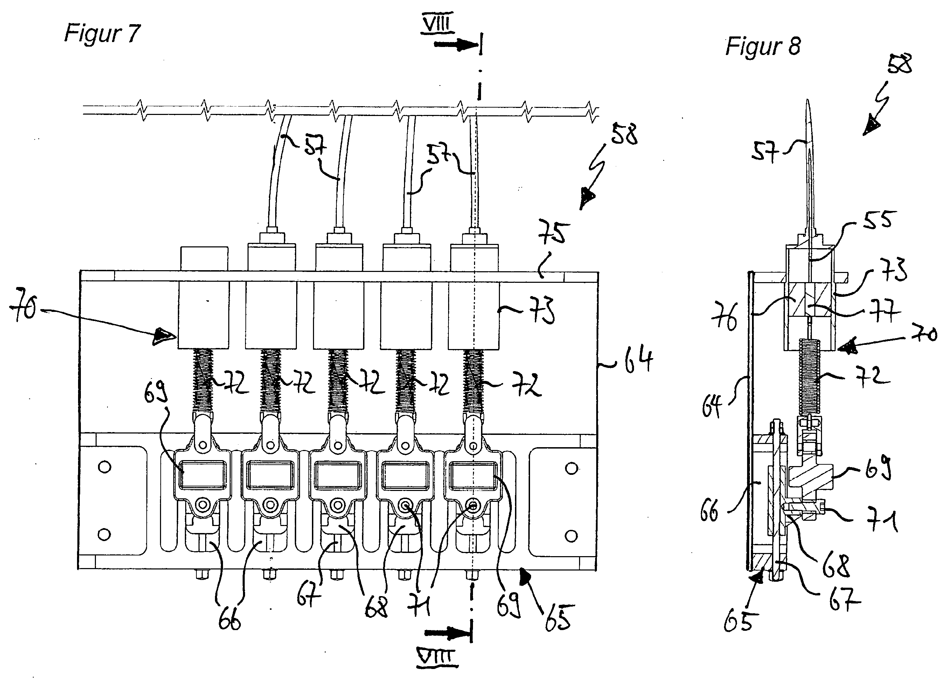

Der Verankerungsbereich 58, dessen Aufbau aus den Figuren 6, 7 und 8 ersichtlich ist, sitzt am Ende eines auf dem Schlitten 11 angeordneten Rahmens 59. Der Rahmen 59 besitzt zwei horizontale Querträger 60, die am vorderen Rand der Montageplatte 25 quer zur Bewegungsrichtung des Schlittens 11 starr befestigt sind. In analoger Weise trägt der hintere Rand der Montageplatte 25 zwei Querträger 61.

Die Enden der Querträger 60, 61 sind auf der einen Seite der Schlittenbahn 12 mittels einer Tragplatte 62 verbunden, die zur Aufnahme einer Hochgeschwindigkeitskamera 63 dient, die die Bewegungen des Teildummys 17 während der Unfallsimulation von der Seite her erfasst.

Am anderen Ende der Querträger 60, 61 ist ebenfalls eine Tragplatte 64 befestigt zur Aufnahme der Komponenten des Verankerungsbereichs 58. Dort sieht man einen auf der Tragplatte 64 mit Längserstreckungsrichtung parallel zur X-Achse befestigten Lagerblock 65, dessen Oberseite eine der Anzahl der längenveränderlichen Elementen 55 entsprechende Anzahl länglicher Ausnehmungen 66 aufweist. Die Ausnehmungen 66 sind in ihrer Längsrichtung von einer Gewindespindel 67 durchdrungen, mit denen jeweils ein mit einer Gewindebohrung versehenes Wiederlageelement 68 verbunden ist. Mittels der Gewindespindel 67 ist somit das Wiederlageelement 68 quer zur X-Richtung und axial zu den längenveränderlichen Elementen 55 verstellbar.

Der Anschluss der Zugseile an die Wiederlageelemente 67 erfolgt unter Zwischenschaltung eines Messorgans 69 und eines Feder-Dämpfer-Systems 70. Als Messorgan 69 dient ein Zugkraftsensor, der mittels einer Schraube 71 am Wiederlageelement 69 befestigt ist. An das Messorgan 69 schließt in axialer Richtung eine Schraubenfeder 72 als Teil des Feder-Dämpfer-Systems 70 an, die sich mit ihrem anderen Ende in den Dämpfungsbereich des Feder-Dämpfer-Systems 70 erstreckt.

Der Reibungsdämpfer des Feder-Dämpfer-Systems 70 umfasst eine Buchse 73, die mit einer Ringschulter am Außenumfang in einer Passbohrung 74 in einem aufrecht von der Tragplatte 64 abstehenden, in X-Richtung verlaufenden Stegblech 75 gelagert ist. Innerhalb der Buchse 73 sind zylindrische am Innenumfang der Buchse 73 anliegende Reibelemente 76 angeordnet, die aufgrund ihres Anpressdrucks an der Innenfläche der Buchse 73 und ihres materialbedingten Reibungseffizienten einen gewissen Widerstand gegen eine axiale Verschiebung innerhalb der Buchse 73 bilden.

Die Reibelemente 76 sind axial von einem Bolzen 77 durchdrungen, der die Zugseile der längenveränderlichen Elemente 55 mit den Schraubenfedern 72 verbindet und axiale Bewegungen der Zugseile 56 auf die Reibelemente 76 überträgt.

Die Montageplatte 25 dient ferner zur Aufnahme einer Kopfstütze 14, deren Aufbau vor allem aus den Fig. 6, 9 und 11 ersichtlich ist. Die Kopfstütze 14 besitzt auf Höhe der Kopfnachbildung 19 ein Kopfpolster 81, das von Stäben 82 getragen wird, die wiederum über Schwenkhebel 83 um eine von einem Lagerbock 85 gebildete horizontale Lagerachse 84 schwenkbar sind. Im vorliegenden Beispiel wird die Höhenverstellung des Kopfpolsters 81 durch eine variable Einstecktiefe der Stäbe 82 im Schwenkhebel 83 erreicht. Die relative Neigung der Kopfstütze vor dem Aufprall des Kopfes lässt sich durch Schwenken um die Lagerachse 84 einstellen.

Im Rahmen der Erfindung liegen ebenfalls Ausführungsformen, bei denen eine Verschiebemöglichkeit des Lagerbocks 85 in X- und/oder Z-Richtung vorgesehen ist oder bei denen die Lagerung der Kopfstütze 14 an der Montageplatte 25 unter Zwischenschaltung einer Aktoreinheit analog der Lagerung des Teildummys 17 auf dem Tragelement ausgeführt ist. Auf diese Weise kann die relative Lage der Kopfstütze 14 zum Teildummy 17 während der Unfallsimulation verändert werden.

Am rückwärtigen Ende des Schlittens 11 bezogen auf die X-Richtung ist ein Stoßübertragungskörper 86 starr mit der Montageplatte 25 verbunden, dessen Stoßfläche 87 in einer Lotebene zur X-Richtung angeordnet ist. Der Stoßübertragungskörper 86 wirkt zusammen mit einem Pendelkörper 88, der über Seile 89 an einer nicht weiter dargestellten Deckenkonstruktion translatorisch pendelnd aufgehängt ist. Durch Erzeugung eines Aufpralls der Schwungmasse 88 im Zuge der Pendelbewegung auf die Stoßfläche 87, ist es möglich, einen sehr hohen und kurzen Impuls auf den Schlitten 11 zu übertragen, der typisch für einen Auffahrunfall ist.

Eine mögliche Ausführungsform einer Aktoreinheit ist in den Fig. 9 bis 12 dargestellt. Unterschiede zu der zuvor beschriebenen Anordnung bestehen lediglich im Aufbau der Aktoreinheit 90. Hinsichtlich der Schlittenbahn 12 des Schlittens 11 sowie des Teildummys 17 besteht weitestgehend Übereinstimmung, so dass unter Beibehaltung gleicher Bezugszeichen für gleiche Merkmale das zuvor Gesagte gilt.

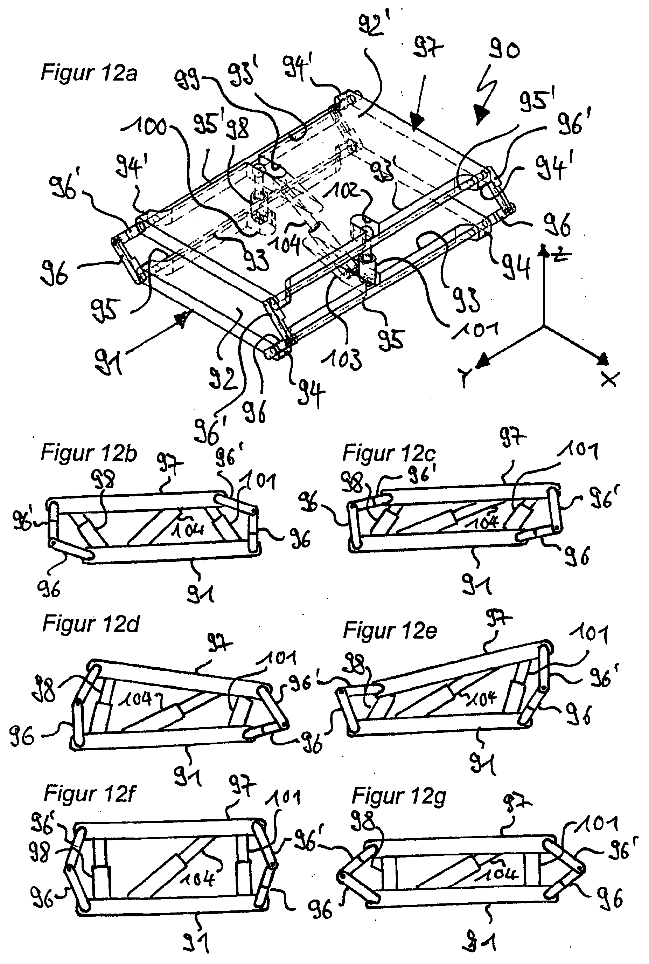

Die in den Figuren 9 bis 11 und vor allem in Figur 12 dargestellte Aktoreinheit 90 besitzt einen Fuß 91, der im Wesentlichen aus einer rechteckförmigen Platte 92 besteht. Die Längsränder 93 des Fußes 91 verlaufen quer zur X-Richtung und weisen an ihren den Querrändern benachbarten Endabschnitten Lagerzapfen 94 mit einer parallel zum Längsrand 93 verlaufenden Lagerbohrung auf. In den Lagerzapfen 94 ist jeweils ein parallel zum Längsrand 93 verlaufender Torsionsstab 95 frei drehbar gelagert. Auf dem über den Querrand überstehenden Längsabschnitt des Torsionsstabs 95 sitzt jeweils drehfest ein Hebel 96.

Das Tragelement 97 weist einen zum Fuß 91 identischen Aufbau auf mit einer rechteckförmigen Platte 92', Längsrändern 93', Lagerzapfen 94', Torsionsstäbe 95' und Hebel 96'.

Fuß 91 und Tragelement 97 liegen sich im vertikalen Abstand gegenüber, wobei die einander zugeordneten Hebel 96, 96' mit ihren freien Enden gelenkig miteinander verbunden sind. Auf diese Weise bilden die Torsionsstäbe 95, 95' und Hebel 96, 96' Synchronisationsmittel aus, die bei einer relativen Bewegung des Tragelements 97 gegenüber dem Fuß 91 nur eine Bewegung in einer Lotebene zur Y-Richtung zulassen, d. h. die Längsränder 93, 93' des Fußes 91 und des Tragelements 97 verlaufen im Zuge einer Relativbewegung stets parallel, während die Querränder sowohl parallel als auch gegeneinander geneigt sein können.

Weiter umfasst die Stelleinrichtung drei Linearversteller zur Realisierung einer Relativbewegung des Tragelements 97 gegenüber dem Fuß 91 im Rahmen der durch die Synchronisationsmittel möglichen Freiheitsgrade. Wie vor allem die Figuren 12 a bis 12 g zeigen dient dazu im Einzelnen eine erste Zylinderkolbeneinheit 98, die sich im Bereich des vorderen Längsrandes 93, 93' mittig zwischen den Querrändern vom Fuß 91 zum Tragelement 97 erstreckt. Die beiden Enden der Zylinderkolbeneinheit 98 sind dabei in entsprechenden Ausnehmungen 99 und 100 in Fuß 91 und Tragelement 97 gelenkig gelagert.

Eine zweite Zylinderkolbeneinheit 102 verbindet in entsprechender Weise die hinteren Längsränder 93, 93' des Fußes 91 und des Tragelements 97 mit gelenkiger Lagerung in den Ausnehmungen 102 und 103.

Eine dritte Zylinderkolbeneinheit 104 erstreckt sich diagonal vom Anlenkpunkt der Zylinderkolbeneinheit 98 im Tragelement 97 zum Anlenkpunkt der Zylinderkolbeneinheit 101 im Fuß 91. Um hier eine Kollision der Zylinderkolbeneinheit 4 mit dem Fuß 91 bzw. im Tragelement 97 zu verhindern, sind die Ausnehmungen 99 und 103 über die Dicke der Platten 92, 92' konisch erweitert.

Durch entsprechende Steuerung der Zylinderkolbeneinheiten 98, 101 und 104 mittels einer nicht dargestellten Steuereinheit ist es möglich, das Tragelement 97 gegenüber dem Fuß 91 zu bewegen, was im Weiteren anhand der Fig. 12 b bis 12 g näher erläutert wird.

Die Figuren 12 b und 12 c zeigen eine translatorische Bewegung des Tragelements 97 in X-Richtung. Diese Bewegung wird im Wesentlichen durch ein Verstellen der Zylinderkolbeneinheit 104 erreicht, wobei die Zylinderkolbeneinheiten 98 und 101 ebenfalls um das erforderliche Maß nachgestellt werden.

In den Figuren 12 d und 12 e ist ein Kippen bzw. Neigen des Tragelements 97 um die Y-Achse dargestellt. Dies geschieht im wesentlichen durch ein entgegen gerichtetes Ausfahren der Zylinderkolbeneinheiten 98 und 101.

Aus den Figuren 12 f und 12 g geht schließlich die Umsetzung einer Hub- und Senkbewegung mittels der erfindungsgemäßen Aktoreinheit 90 hervor, bei der die Zylinderkolbeneinheiten 98 und 101 mit gleicher Wirkrichtung betrieben werden. Die Zylinderkolbeneinheit 104 wird dabei lediglich im Rahmen des sich aus der Geometrie ergebenden Umfangs nachgeführt.

Es versteht sich, dass mit der Aktoreinheit 90 auch jede beliebige Kombination der vorstehend beschriebenen Bewegungen ausführen lässt.

Die Integration der in den Fig. 12 a bis 12 g beschriebenen Aktoreinheit 90 in eine Erfindungsgemäße Anordnung zeigen die Fig. 9 bis 11. Die Aktoreinheit 90 ist mit ihrem Fuß 91 starr auf der Oberseite der Montageplatte 25 befestigt, wobei die Längsränder 93, 93' quer zur Bewegungsrichtung des Schlittens 11 angeordnet sind. Nicht weiter dargestellt sind die Versorgungsleitungen zur Aktivierung der Zylinderkolbeneinheiten 98, 101 und 104.

Die Befestigung des Teildummys 17 auf der Oberseite des Tragelements 97 erfolgt über die Befestigungsplatte 34. Dabei sind die längenveränderlichen Elemente 41 an ein nicht dargestelltes Druckluftsystem mit Steuereinheit und Steuerventilen angeschlossen und die längenveränderlichen Elemente 55 sind zum Verankerungsbereich 58 geführt.

Durch ein vorbestimmtes Verstellen des Tragelements 97 während der Bewegung des Schlittens 11 in X-Richtung entlang der Schlittenbahn 12 kann eine bei einem Auffahrunfall typische Bewegungsbahn des Teildummys 17 nachgefahren werden. Bei einer Wiederholung der Unfallsimulation ergibt sich stets der gleiche Bewegungsablauf des Schlittens 11 und des Tragelements 97, so dass Versuche mit einer extrem hohen Wiederholgenauigkeit ausgeführt werden können.

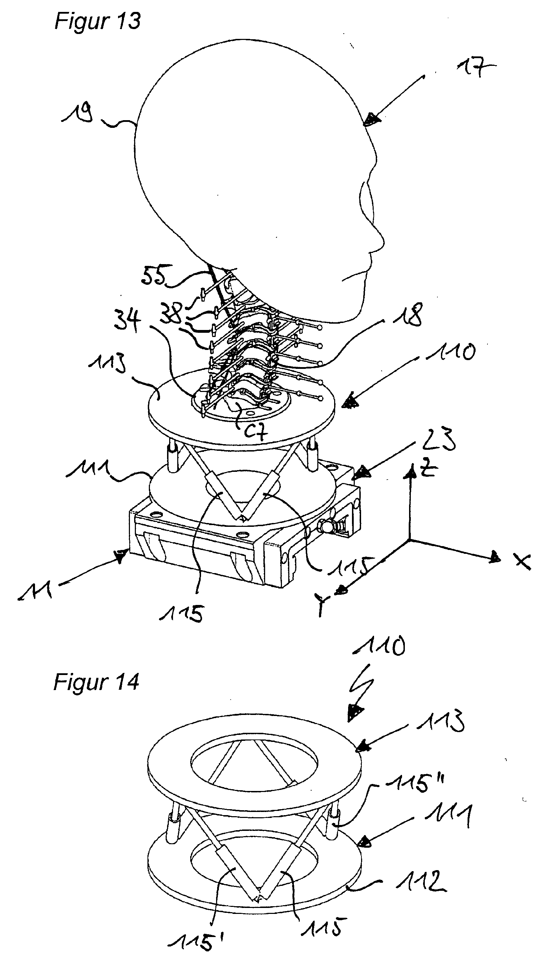

Während die Aktoreinheit gemäß Figur 12 a nur Bewegungen in einer Lotebene zur Y-Achse zulässt, besitzt die in den Fig. 13 und 14 dargestellte Ausführungsform einer Aktoreinheit 110 sechs Freiheitsgrade, d.h. die Aktoreinheit 110 ermöglicht translatorische und/oder rotatorische Bewegungen in und um alle Raumachsen X, Y, Z.

Aus Fig. 14 geht der nähere Aufbau der Aktoreinheit 110 hervor, die einen Fuß 111 in Form einer Ringscheibe 112 besitzt. Über sechs Zylinderkolbeneinheiten 115 ist ein ringscheibenförmiges Tragelement 113 in vertikalem Abstand zum Fuß 111 gehalten. Die Zylinderkolbeneinheiten 115 ergeben in ihrer Aneinanderreihung einen zickzackförmigen, der Ringscheibenform des Fußes 111 und Trageelements 113 folgenden Verlauf. Dabei bildet jede Zylinderkolbeneinheit 115 mit ihrer einen benachbarten Zylinderkolbeneinheit 115' einen gemeinsamen gelenkigen Lagerpunkt im Fuß 111 und einen mit der anderen benachbarten Zylinderkolbeneinheit 115" gemeinsamen gelenkigen Anlenkpunkt im Tragelement 113 aus. Auf diese Weise ergibt sich eine Dreipunktlagerung des Tragelements 113 oberhalb des Fußes 111.

Fig. 13 zeigt die Integration der Aktoreinheit 110 in eine erfindungsgemäße Anordnung. Die Aktoreinheit 110 kann aufgrund ihrer geringen Abmessungen mit ihrer Ringscheibe 112 direkt auf das Gleitstück 23 des Schlittens 11 starr aufgespannt sein. Auf dem Tragelement 114 ist der Teildummy 17 über die Platte 34 fixiert. Durch geeignetes Verstellen der Zylinderkolbeneinheit 115 ist jede Bewegung des Tragelements 114 im Raum möglich, so dass in Überlagerung mit der Bewegung des Schlittens 11 in X-Richtung die räumliche Bewegungsbahn und Neigung des oberen Torsowirbels T1 realitätsgetreu nachvollzogen werden kann.

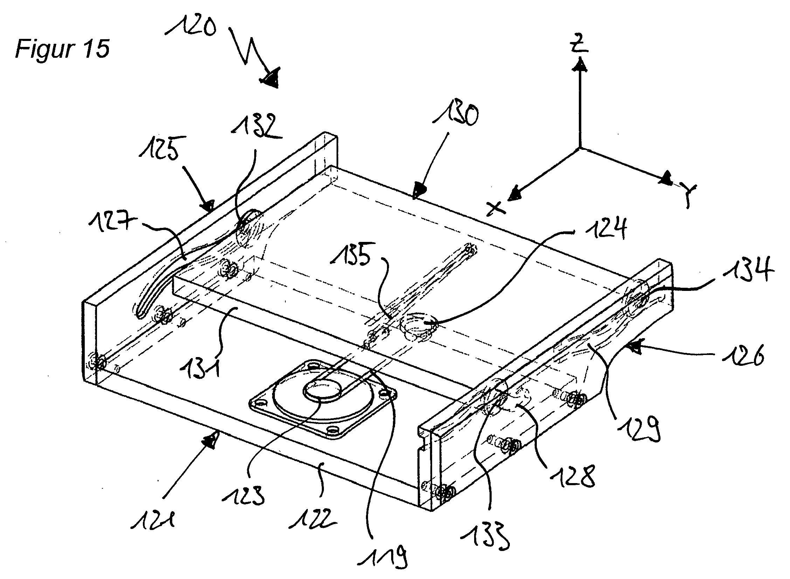

Eine andere Ausführungsform stellt die in Fig. 15 dargestellte Aktoreinheit 120 dar. Die Aktoreinheit 120 besitzt einen Fuß 121 in Form einer rechteckförmigen Platte 122. An der Unterseite der Platte 122 ist ein nicht weiter dargestellter Schrittmotor angeordnet, dessen Antriebswelle die Platte 122 durchdringt und auf der Oberseite ein Antriebsrad 123 trägt.

Im Abstand in X-Richtung ist auf der Oberseite der Platte 122 eine frei drehbare Umlenkrolle 124 befestigt, die zusammen mit dem Antriebsrad 123 einen Antriebsriemen 119 aufspannt.

Die zur X-Richtung parallelen Seiten der Platte 122 sind von aufrecht stehenden Seitenteilen 125 und 126 eingefasst, so dass sich ein trogartiges Gebilde ergibt. Das Seitenteil 125 weist mit seiner Innenseite eine wellenförmige Führungsnut 127 mit stetigem Verlauf auf, die entgegen der X-Richtung zunächst ansteigt, dann wieder abfällt und wieder ansteigt. Das Seitenteil 126 besitzt zwei ebenfalls stetig verlaufende und in X-Richtung hintereinander angeordnete Führungsnuten 128 und 129, wobei die Führungsnut 128 einen der Führungsnut 127 entsprechenden Verlauf aufweist, während die Führungsnut 129 einen entgegengesetzten Verlauf zeigt, indem die Führungsnut 129 von oben zunächst nach unten und dann wieder nach oben verläuft.

Darüber hinaus umfasst die Aktoreinheit 120 ein Tragelement 130 in Form einer rechteckförmigen Platte 131, die mit Spiel zwischen den Seitenteilen 125 und 126 in vertikalem Abstand zur Platte 122 angeordnet ist. Die dem Seitenteil 125 zugewandte Seite des Tragelements 130 besitzt mittig einen Führungszapfen 132, der in die Führungsnut 127 greift.

Aus der gegenüberliegenden Seite des Tragelements 130 stehen zwei Führungszapfen 133 und 134 hervor, wobei der Führungszapfen 133 in die Führungsnut 128 eingreift und der Führungszapfen 134 in die Führungsnut 129. Auf diese Weise ergibt sich eine statisch bestimmte Dreipunktlagerung des Tragelements 130 an den Seitenteilen 125 und 126.

Die Nuten 127, 128 und 129 bilden also zusammen mit den Führungszapfen 132, 133 und 134 eine Zwangsführung für das Tragelement 130 bei dessen Bewegung in X-Richtung.

Die Geometrie der Führungsnuten 127, 128, 129 bestimmt dabei die konkrete Bewegung des Tragelements 130. Durch entsprechende Wahl des Verlaufs jeder einzelnen Führungsnut 127, 128, 129 können sowohl translatorische Bewegungen in X- und Z-Richtung als auch rotatorische Bewegungen um die X- und Y-Achse des Tragelements 130 herbeigeführt werden. Im vorliegenden Beispiel wird bei einer Bewegung der Platte 131 in X-Richtung gleichzeitig ein Heben und Senken der Platte 131 sowie eine Rotation um die Y-Achse erzeugt.

Der Antrieb für die Relativbewegung des Tragelements 130 gegenüber dem Fuß 121 erfolgt über einen zug- und druckfesten Kraftübertragungsstab 135, der mit seinem einen Ende gelenkig an den Antriebsriemen 119 und mit seinem anderen Ende gelenkig an die Unterseite der Platte 131 anschließt. Diese Art des Antriebs kommt somit ohne Linearversteller aus. Antriebe mit Linearversteller zur Erzeugung der Relativbewegung liegen jedoch ebenso im Rahmen der Erfindung.

Die Aktoreinheit 120 wird analog den Aktoreinheiten 90 und 110 mit dem Fuß 121 auf dem Schlitten 11 befestigt, wobei das plattenförmige Tragelement 130 zur Aufnahme des Teildummys 17 dient.

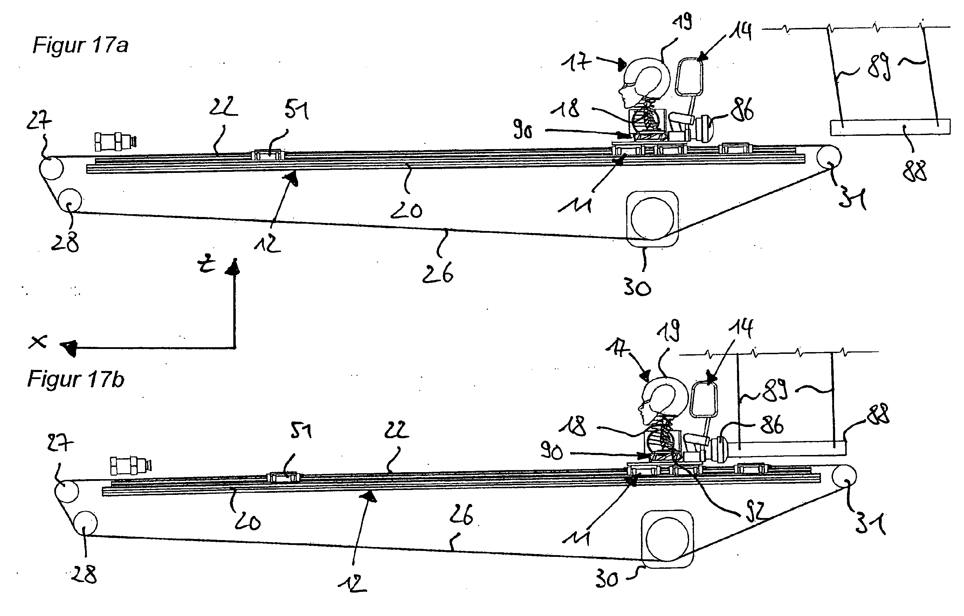

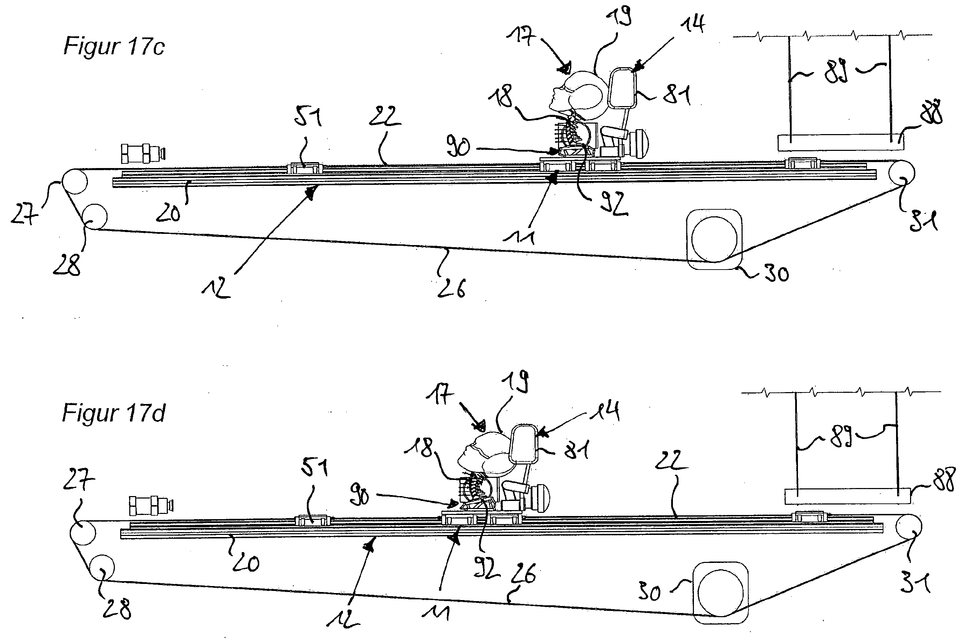

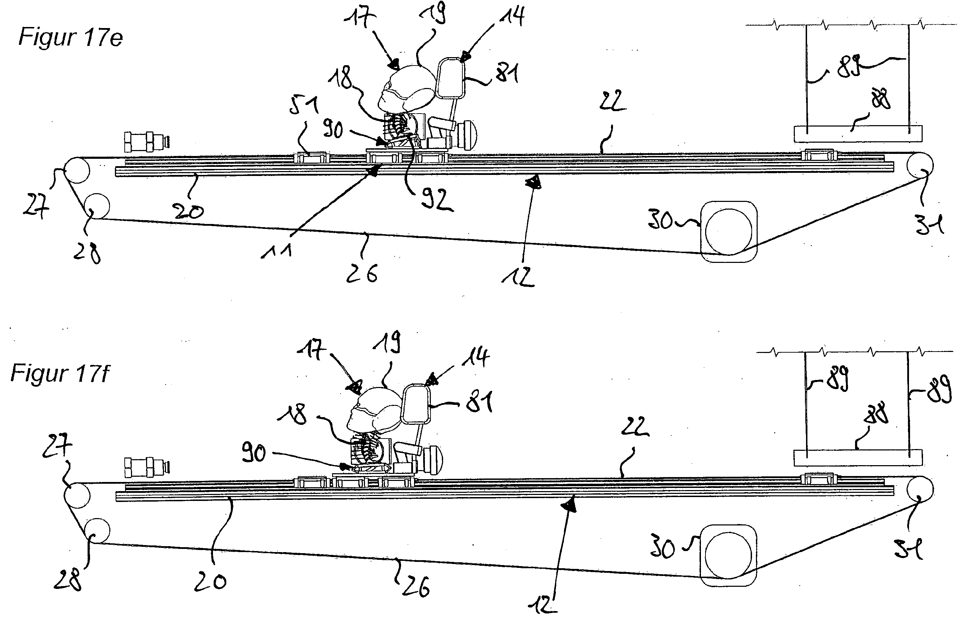

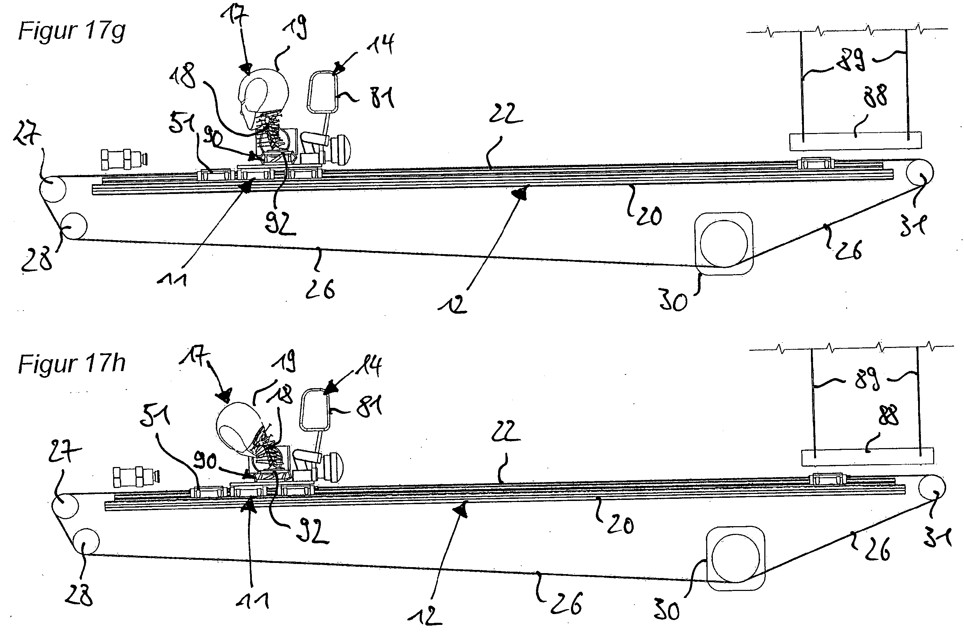

Der Ablauf einer Unfallsimulation mit einer erfindungsgemäßen Anordnung wird nachfolgend anhand der Figuren 17 a bis 17 h näher erläutert, die jeweils Momentaufnahmen zeigen. Die Simulation entspricht einem Auffahrunfall auf ein stehendes Kraftfahrzeug mit zusätzlicher zeitverschobener Verzögerung, was einen Sekundäraufprall auf ein Vorderfahrzeug oder ein reaktives Bremsen durch den Fahrzeuginsassen simuliert.

Fig. 17 a zeigt die Ausgangssituation für die Simulation, bei der der Teildummy 17 in aufrechter Position auf der Aktoreinheit 90 befestigt und von der künstlichen Muskulatur gehalten ist. Die Halswirbelsäule 18 ist neutral vorgespannt, was dem Grundtonus der Nackenmuskulatur entspricht, und was durch die horizontale und parallele Lage der Neigungszeiger ersichtlich ist.

Der Aufprall wird im vorliegenden Beispiel durch die Pendelmasse 88 erzeugt, die aus ihrer Ruhestellung entgegen der X-Richtung gezogen und bereit zum Zurückschwingen ist. Alternativ kann der Aufprall mittels des Synchronmotors 30 oder eines weiteren Schlittens mit geeigneter Masse, der auf der Schlittenbahn 12 auf den Schlitten 11 auffährt, simuliert werden.

Fig. 17 b zeigt den Zeitpunkt des Aufpralls, wobei der Impuls von der Pendelmasse 88 über den Stoßübertragungskörper 86 auf den Schlitten 11 übertragen wird, wodurch dieser eine abrupte Beschleunigung erfährt.

Infolge der Massenträgheit des Teildummys 17, die im Schwerpunkt des Kopfes 19 konzentriert ist und infolge der verformbaren Halswirbelsäule 18 kommt es zu einer Annährung des Kopfes 19 an die Kopfstütze 14, wobei gleichzeitig eine Dreh- bzw. Taumelbewegung des Kopfes 19 einsetzt. Die Bewegung des Teildummys 17 initiiert Gegenkräfte in der künstlichen Muskulatur.

Das Einsinken des Körpers eines Fahrzeuginsassen in den Fahrzeugsitz in der Anfangsphase eines Auffahrunfalls kann durch eine Verschiebung der Kopfstütze 14 in X-Richtung und/oder ein Verstellen des Tragelements 92 der Aktoreinheit entgegen der X-Richtung nachgestellt werden. Das zu diesem Zeitpunkt leichte Anheben des Oberkörpers eines Fahrzeuginsassen wird durch ein Verstellen des Tragelements 92 in Z-Richtung simuliert.

Die beginnende Extensionsbewegung der Halswirbelsäule 18 ist an der leichten Schrägstellung der Neigungszeiger erkennbar, die im Bereich der unteren Halswirbel am größten ist.

Fig. 17 c zeigt die Simulation des Eindringens des Fahrzeuginsassen in den Sitz. Die damit einsetzende Neigung des oberen Torsowirbels T1 in X-Richtung wird durch eine entsprechende Stellung des Tragelements 92 der Aktoreinheit 90 nachgestellt. Aufgrund der Massenträgheit ist zu diesem Zeitpunkt der Kopf 19 des Teildummys 17 noch im Bereich der Kopfstütze 14, woraus sich eine anhaltende Vergrößerung der Extensionsbewegung ergibt. Infolge der Krafteinwirkung durch die künstliche Muskulatur beginnt der Kopf 19 des Teildummys 17 in einer Gegenbewegung zu drehen.

Fig. 17 d zeigt die Fortführung der in Figur 17 c beschriebenen Bewegung mit einem weiter einsinkenden Fahrzeuginsassen, was durch eine Erhöhung der Neigung des Tragelements 92 um die Y-Achse simuliert wird. Der Kopf 19 erreicht seinen maximalen Einsinkpunkt im Kopfpolster 81 der Kopfstütze 30 und setzt seine Drehung fort. Zu diesem Zeitpunkt ist die maximale Extensionsbewegung erreicht.

Fig. 17 e zeigt die Simulation des Zeitpunkts des "rebounds", bei welchem der Oberkörper eines Fahrzeuginsassen aus dem Sitz zurückfedert, was durch die Schrägstellung des Tragelements 92 zum Ausdruck kommt, wobei nun der Kopf 19 der Bewegung des Oberkörpers folgt. Gleichzeitig hat der Kopf 19 seine Drehbewegung beendet und dreht in entgegengesetzter Richtung zurück.

Mit Fig. 17 f wird das typische reaktive Bremsen eines Fahrzeuginsassen auf einen Auffahrunfall als weiterer Einflussparameter nachgestellt, indem der Schlitten 11 auf einen Bremsschlitten auffährt. Dieser entgegen der Bewegung des Schlittens 11 gerichtete Impuls verstärkt die Bewegung des Teildummys 17 in X-Richtung, wobei der Kopf 19 den vom Sicherheitsgurt zurückgehaltenen Oberkörper des Insassen überholt. Dieser Zustand wird durch Zurücknahme der Neigung des Tragelements 92 der Aktoreinheit 90 nachgebildet.

Die Figuren 17g und 17h zeigen das Verhalten des Dummys beim scharfen Abbremsen (17g) bzw. bei einem Folgeauffahrunfall (17h).

Während der gesamten Simulation wird die absolute Bewegung des oberen Torsowirbels T1 durch eine Superposition der Schlittenbewegung 11 entlang der Schlittenbahn 12 in X-Richtung mit den Bewegungen des Tragelements 92 überlagert, was letztendlich zu einem realitätsgetreuen Nachfahren der räumlichen Kurve des Torsowirbels T1 eines Fahrzeuginsassen bei einem Auffahrunfall entspricht.

Während der gesamten Simulation werden die Bewegungen des Teildummys 17 von mindestens zwei mitfahrenden Kameras von der Seite und von oben sowie einer stationären Kamera am Ende der Schlittenbahn 12 aufgezeichnet.

## Patentansprüche

1. Anordnung zur Simulation von Aufprallunfällen, insbesondere Auffahrunfällen, zur Ermittlung deren Auswirkungen auf die Insassen eines Fahrzeugs, mit einem entlang einer linearen Führung (22) mittels eines Antriebs (30) primär bewegbaren Schlitten (11), auf dem ein Dummy (17) angeordnet ist und der mit einer plötzlichen Beschleunigungsänderung beaufschlagbar ist, **dadurch gekennzeichnet, dass** zwischen Schlitten (11) und Dummy (17) eine Aktoreinheit (15, 33, 90, 110, 120) zwischengeschaltet ist, wobei der Dummy (17) an der Aktoreinheit (15, 33, 90, 110, 120) kraftschlüssig befestigt ist, und die Aktoreinheit (15, 33, 90, 110, 120) zur Aufbringung einer Sekundärbewegung auf den Dummy (17) ausgelegt ist, so dass eine räumliche Bewegungskurve des Dummies (17) durch zeitliche und räumliche Überlagerung der Primärbewegung des Schlittens (11) mit der Sekundärbewegung derAktoreinheit (15, 33, 90, 110, 120) nachbildbar ist.

2. Anordnung nach Anspruch 1, **dadurch gekennzeichnet, dass** die Sekundärbewegung mindestens eine translatorische und/oder mindestens eine rotatorische Bewegungskomponente bezogen auf die Raumachsen (X, Y, Z) eines Koordinatensystems aufweist.

3. Anordnung nach Anspruch 1 oder 2, **dadurch gekennzeichnet, dass** die Sekundärbewegung eine Kombination aus einer translatorischen Bewegungskomponente in einer vertikalen Achse (Z) und mindestens einer rotatorischen Bewegungskomponente um eine horizontale Achse (Y) quer zur Bewegungsrichtung (X) des Schlittens (11) ist.

4. Anordnung nach Anspruch 3, **dadurch gekennzeichnet, dass** die überlagerte Bewegung zusätzlich eine rotatorische Bewegungskomponente um eine Achse (X) in Bewegungsrichtung des Schlittens (11) aufweist.

5. Anordnung nach einem der Ansprüche 1 bis 4, **dadurch gekennzeichnet, dass** die Aktoreinheit (15, 33, 90, 110, 120) einen Fuß (36, 91, 111, 121) besitzt, der starr am Schlitten (11) befestigt ist und ein im Abstand, vorzugsweise im vertikalen Abstand dazu angeordnetes Tragelement (37, 97, 113, 130), auf dem der Dummy (17) befestigt ist, wobei Fuß (36, 91, 111, 121) und Tragelement über eine Stelleinrichtung zur Veränderung der relativen Lage von Fuß (36, 91, 111, 121) und Tragelement (37, 97, 113, 130) miteinander verbunden ist.

6. Anordnung nach Anspruch 5, **dadurch gekennzeichnet, dass** die Stelleinrichtung einen oder mehrere Linearversteller umfasst, die vorzugsweise von elektrischen, pneumatischen oder hydraulischen Zylinderkolbeneinheiten (98, 101, 104, 115), Spindeltriebe oder Piezoelementen gebildet sind.

7. Anordnung nach Anspruch 5 oder 6, **dadurch gekennzeichnet, dass** die Aktoreinheit (15, 33, 90, 110, 120) mindestens einen Linearversteller umfasst, der gelenkig sowohl an den Fuß (36, 91, 111, 121) als auch das Tragelement (37, 97, 113, 130) anschließt und dass die Stelleinrichtung Führungen und/oder Gelenke zwischen Fuß (36, 91, 111, 121) und Tragelement (37, 97, 113, 130) aufweist.

8. Anordnung nach Anspruch 5 oder 6, **dadurch gekennzeichnet, dass** die Aktoreinheit (110) sechs Linearversteller (115) umfasst, die im Kreis zwischen Fuß (111) und Tragelement (113) angeordnet sind, wobei jeweils ein Linearversteller (115) mit dem einen benachbarten Linearversteller (115) in einem Punkt am Fuß (111) gelenkig angeschlossen ist und mit dem anderen benachbarten Linearversteller (115) in einem Punkt am Tragelement (113) gelenkig angeschlossen ist.

9. Anordnung nach Anspruch 5 oder 6, **dadurch gekennzeichnet, dass** die Aktoreinheit (90) mindestens drei Linearversteller (89, 101, 104) aufweist und zwischen Fuß (91) und Tragelement (97) Mittel zur Synchronisation der Bewegung der Längsseiten des Tragelements (97) angeordnet sind.

10. Anordnung nach Anspruch 9, **dadurch gekennzeichnet, dass** die Mittel zur Synchronisation jeweils einen Torsionsstab (95) an den Querseiten des Fußes (91) und des Tragelements (97) umfassen, wobei auf beiden Ende der Torsionsstäbe (95) Hebel (96, 96') drehfest sitzen und die einander zugeordneten Hebel (96, 96') von Fuß (91) und Tragelement (97) jeweils paarweise gelenkig miteinander verbunden sind.

11. Anordnung nach Anspruch 5 oder 6, **dadurch gekennzeichnet, dass** Tragelement (130) und Fuß (121) über eine Kulissenführung (127, 128, 132, 133) miteinander verbunden sind, entlang der das Tragelement (130) relativ zum Fuß (121) verschieblich ist.

12. Anordnung nach einem der Ansprüche 1 bis 11, **dadurch gekennzeichnet, dass** der Dummy (17) eine biofidele Nachbildung der Halswirbelsäule besitzt, die mit ihrem unteren Wirbel (C7) starr am Fuß (36, 91, 111, 121) befestigt ist und auf deren oberem Halswirbel (C1) eine Kopfnachbildung (17) angeordnet ist.

13. Anordnung nach Anspruch 12, **dadurch gekennzeichnet, dass** die Halswirbelsäule (18) des Dummys (17) zur Nachbildung der Muskulatur der Fahrzeuginsassen erste längenveränderliche Elemente (40, 41) aufweist, die sich entlang der Längserstreckungsrichtung der Halswirbelsäule (18) erstrecken und mit ihren beabstandeten Enden an den Wirbeln (C1 bis C7) der Halswirbelsäule (18) und der Basis (39) der Kopfnachbildung befestigt sind, vorzugsweise zwischen der Basis (39) der Kopfnachbildung und dem ersten und/oder zweiten Halswirbel (C1, C2) angeordnet sind.

14. Anordnung nach Anspruch 13, **dadurch gekennzeichnet, dass** die ersten längenveränderlichen Elemente (40, 41) einen elastischen länglichen Körper besitzen, der durch Aufbringung einer Querdehnung verkürzbar ist.

15. Anordnung nach Anspruch 13 oder 14, **dadurch gekennzeichnet, dass** die Halswirbelsäule (18) des Dummys (17) zur Nachbildung der Muskulatur der Fahrzeuginsassen zweite längenveränderliche Elemente (55) aufweist.

16. Anordnung nach Anspruch 15, **dadurch gekennzeichnet, dass** die zweiten längenveränderlichen Elemente (55) elastisch wirkende Zugelemente besitzen, die sich aus dem Bereich der Basis (39) der Kopfnachbildung (19) in den Bereich des unteren Halswirbels (C7) erstrecken.

17. Anordnung nach Anspruch 15 oder 16, **dadurch gekennzeichnet, dass** die zweiten längenveränderlichen Elemente (55) Zugelemente besitzen, die mit ihrem einen Ende im Bereich der Basis (39) der Kopfnachbildung (19) befestigt, durch den Bereich des unteren Halswirbels (C7) geführt und mit ihrem anderen Ende in Haltelementen (65 bis 77) verankert sind.

18. Anordnung nach Anspruch 17, **dadurch gekennzeichnet, dass** die Halteelemente jeweils ein Federelement (72) aufweisen, das in Richtung der Zugelemente (55) elastisch federnde Eigenschaften besitzt.

19. Anordnung nach Anspruch 17 oder 18, **dadurch gekennzeichnet, dass** die Halteelemente über reibschlüssige Flächen (73, 76) verankert sind und der Reibschluss einstellbar ist, wobei die reibschlüssigen Flächen vorzugsweise nach Art einer Stopfbuchse ausgebildet sind.

20. Anordnung nach einem der Ansprüche 1 bis 19, **dadurch gekennzeichnet, dass** der Antrieb für den Schlitten (11) von einem zweiten Schlitten oder einer bewegte Masse, vorzugsweise von einer schwingenden oder pendelnden Masse (88) gebildet ist.

21. Anordnung nach einem der Ansprüche 1 bis 20, **dadurch gekennzeichnet, dass** der Antrieb für den Schlitten (11) einen Motor (30), vorzugsweise eine Synchronantrieb oder einen Linearmotor, umfasst, der über einen Kraftübertragungselement (29, 26) mit dem Schlitten (11) verbunden ist.

22. Anordnung nach einem der Ansprüche 1 bis 21, **dadurch gekennzeichnet, dass** in Richtung (X) der linearen Führung (22) des Schlittens (11) ein Bremsschlitten (51) angeordnet ist, auf den der Schlitten (11) im Zuge seiner Bewegung auffährt.

23. Anordnung nach einem der Ansprüche 1 bis 22, **dadurch gekennzeichnet, dass** an dem Schlitten (11) hinter dem Dummy (17) eine Kopfstütze (14) angeordnet ist.

## Claims

1. Arrangement for simulating collisions, in particular rear-end collisions, for determining the consequences thereof on the occupants of a vehicle, comprising a carriage (11) that can be primarily moved by means of a drive (30) along a linear guide (22), on which carriage a dummy (17) is arranged and to which carriage a sudden change in acceleration can be applied, **characterised in that**
an actuator unit (15, 33, 90, 110, 120) is inserted between the carriage (11) and the dummy (17), the dummy being non-positively fastened to the actuator unit (15, 33, 90, 110, 120), and the actuator unit (15, 33, 90, 110, 120) being designed to apply a secondary movement to the dummy (17) such that a spatial movement curve of the dummy (17) can be simulated by temporal and spatial superimposition of the primary movement of the carriage (11) with the secondary movement of the actuator unit (15, 33, 90, 110, 120).

2. Arrangement according to claim 1, **characterised in that** the secondary movement comprises at least one translational and/or at least one rotatory movement component based on the spatial axes (X, Y, Z) of a coordinate system.

3. Arrangement according to either claim 1 or claim 2, **characterised in that** the secondary movement is a combination of a translational movement component in a vertical axis (Z) and at least one rotatory movement component about a horizontal axis (Y) transversely to the direction of movement (X) of the carriage (11).

4. Arrangement according to claim 3, **characterised in that** the superimposed movement additionally comprises a rotatory movement component about an axis (X) in the direction of movement of the carriage (11).

5. Arrangement according to any of claims 1 to 4, **characterised in that** the actuator unit (15, 33, 90, 110, 120) has a foot (36, 91, 111, 121) that is rigidly fastened to the carriage (11) and, arranged at a distance therefrom, preferably at a vertical distance therefrom, a support element (37, 97, 113, 130) to which the dummy (17) is fastened, the foot (36, 91, 111, 121) and the support element being interconnected by means of an actuating device for changing the relative position of the foot (36, 91, 111, 121) and the support element (37, 97, 113, 130).

6. Arrangement according to claim 5, **characterised in that** the actuating device comprises one or more linear adjusters that are preferably formed by electric, pneumatic or hydraulic cylinder-piston units (98, 101, 104, 115), spindle drives or piezo elements.

7. Arrangement according to either claim 5 or claim 6, **characterised in that** the actuating unit (15, 33, 90, 110, 120) comprises at least one linear adjuster, which is hinged both to the foot (36, 91, 111, 121) and the support element (37, 97, 113, 130), and **in that** the actuating device comprises guides and/or joints between the foot (36, 91, 111, 121) and the support element (37, 97, 113, 130).

8. Arrangement according to either claim 5 or claim 6, **characterised in that** the actuator unit (110) comprises six linear adjusters (115), which are arranged in a circle between the foot (111) and the support element (113), each linear adjuster (115) being hinged to one adjacent linear adjuster (115) at a point on the foot (111) and being hinged to the other adjacent linear adjuster (115) at a point on the support element (113).

9. Arrangement according to either claim 5 or claim 6, **characterised in that** the actuator unit (90) comprises at least three linear adjusters (89, 101, 104) and means for synchronising the movement of the longitudinal sides of the support element (97) are arranged between the foot (91) and the support element (97).

10. Arrangement according to claim 9, **characterised in that** the synchronising means each comprise a torsion bar (95) on the transverse sides of the foot (91) and of the support element (97), levers (96, 96') being rotationally fixed to the two ends of the torsion bars (95) and the levers (96, 96') that are associated with one another being interconnected in pairs in a hinged manner by the foot (91) and the support element (97).

11. Arrangement according to either claim 5 or claim 6, **characterised in that** the support element (130) and the foot (121) are interconnected by means of a connecting link guide (127, 128, 132, 133), along which the support element (130) can be moved relative to the foot (121).

12. Arrangement according to any of claims 1 to 11, **characterised in that** the dummy (17) has a simulation of the cervical spine that is faithful to the biology thereof and which is rigidly fastened to the foot (36, 91, 111, 121) by means of its lower vertebra (C7) and on the upper cervical vertebra (C1) of which a simulated head (17) is arranged.

13. Arrangement according to claim 12, **characterised in that** the cervical spine (18) of the dummy (17) comprises first elements (40, 41) of variable length for simulating the musculature of the vehicle occupants, which elements extend in the direction of longitudinal extension of the cervical spine (18) and, by means of their spaced-apart ends, are fastened to the vertebrae (C1 to C7) of the cervical spine (18) and to the base (39) of the simulated head, preferably arranged between the base (39) of the simulated head and the first and/or second cervical vertebra (C1, C2).

14. Arrangement according to claim 13, **characterised in that** the first elements (40, 41) of variable length have a resilient elongate body, which can be shortened by applying a transverse strain.

15. Arrangement according to either claim 13 or claim 14, **characterised in that** the cervical spine (18) of the dummy (17) comprises second elements (55) of variable length for simulating the musculature of the vehicle occupants.

16. Arrangement according to claim 15, **characterised in that** the second elements (55) of variable length have resiliently acting tension elements which extend from the region of the base (39) of the simulated head (19) into the region of the lower cervical vertebra (C7).

17. Arrangement according to either claim 15 or claim 16, **characterised in that** the second elements (55) of variable length have tension elements which, at one end thereof, are fastened in the region of the base (39) of the simulated head (19), guided through the region of the lower cervical vertebra (C7) and, at the other end thereof, anchored in retaining elements (65 to 77).

18. Arrangement according to claim 17, **characterised in that** the retaining elements each comprise a spring element (72) which has resilient properties in the direction of the tension elements (55).

19. Arrangement according to either claim 17 or 18, **characterised in that** the retaining elements are anchored by means of frictional surfaces (73, 76), and the frictional engagement is adjustable, the frictional surfaces preferably being formed in the manner of a stuffing box.

20. Arrangement according to any of claims 1 to 19, **characterised in that** the drive for the carriage (11) is formed by a second carriage or a moving mass, preferably by a swinging or oscillating mass (88).

21. Arrangement according to any of claims 1 to 20, **characterised in that** the drive for the carriage (11) comprises a motor (30), preferably a synchronous drive or a linear motor, which is connected to the carriage (11) by means of a force transmission element (29, 26).

22. Arrangement according to any of claims 1 to 21, **characterised in that** a brake carriage (51) is arranged in the direction (X) of the linear guide (22) of the carriage (11), into which brake carriage the carriage (11) runs in the course of its movement.

23. Arrangement according to any of claims 1 to 22, **characterised in that** a headrest (14) is arranged behind the dummy (17) on the carriage (11).

## Revendications

1. Dispositif de simulation de télescopages, en particulier de collisions, afin de déterminer leurs répercussions sur les occupants d'un véhicule, comprenant un chariot (11) qui peut être animé de mouvements primaires le long d'un guide rectiligne (22), au moyen d'un entraînement (30), sur lequel un mannequin (17) est placé, et qui peut être sollicité par une brusque variation d'accélération, **caractérisé par le fait qu'**une unité d'actionnement (15, 33, 90, 110, 120) est interposée entre le chariot (11) et le mannequin (17), ledit mannequin (17) étant fixé à ladite unité d'actionnement (15, 33, 90, 110, 120) par engagement positif, et l'unité d'actionnement (15, 33, 90, 110, 120) étant conçue pour imprimer un mouvement secondaire au mannequin (17) de façon telle qu'une courbe de mouvement dudit mannequin (17) dans l'espace puisse être reproduite par superpositions, temporelle et spatiale, du mouvement primaire dudit chariot (11) avec le mouvement secondaire de ladite unité d'actionnement (15, 33, 90, 110, 120).

2. Dispositif selon la revendication 1, **caractérisé par le fait que** le mouvement secondaire présente au moins une composante de mouvement translatoire et/ou au moins une composante de mouvement rotatoire par rapport aux axes spatiaux (X, Y, Z) d'un système de coordonnées.

3. Dispositif selon la revendication 1 ou 2, **caractérisé par le fait que** le mouvement secondaire est une combinaison d'une composante de mouvement translatoire suivant un axe vertical (Z) et d'au moins une composante de mouvement rotatoire autour d'un axe horizontal (Y), transversalement par rapport à la direction de mouvement (X) du chariot (11).

4. Dispositif selon la revendication 3, **caractérisé par le fait que** le mouvement superposé présente, additionnellement, une composante de mouvement rotatoire autour d'un axe (X) dans la direction de mouvement du chariot (11).

5. Dispositif selon l'une des revendications 1 à 4, **caractérisé par le fait que** l'unité d'actionnement (15, 33, 90, 110, 120) comporte un piètement (36, 91, 111, 121) fixé rigidement au chariot (11), et un élément de support (37, 97, 113, 130) qui est implanté à distance, de préférence verticalement à distance dudit piètement, et sur lequel le mannequin (17) est fixé, le piètement (36, 91, 111, 121) et l'élément de support étant reliés l'un à l'autre par l'intermédiaire d'un dispositif de réglage, en vue de modifier la position relative dudit piètement (36, 91, 111, 121) et dudit élément de support (37, 97, 113, 130).

6. Dispositif selon la revendication 5, **caractérisé par le fait que** le dispositif de réglage inclut un ou plusieurs organe(s) de déplacement linéaire formé(s), de préférence, par des vérins (98, 101, 104, 115) électriques, pneumatiques ou hydrauliques, par des entraînements à broches ou par des éléments piézoélectriques.

7. Dispositif selon la revendication 5 ou 6, **caractérisé par le fait que** l'unité d'actionnement (15, 33, 90, 110, 120) inclut au moins un organe de déplacement linéaire se rattachant, de manière articulée, tant au piètement (36, 91, 111, 121) qu'à l'élément de support (37, 97, 113, 130) ; et **par le fait que** le dispositif de réglage est pourvu de guides et/ou d'articulations entre ledit piètement (36, 91, 111, 121) et ledit élément de support (37, 97, 113, 130).

8. Dispositif selon la revendication 5 ou 6, **caractérisé par le fait que** l'unité d'actionnement (110) compte six organes (115) de déplacement linéaire, agencés en une circonférence entre le piètement (111) et l'élément de support (113), sachant qu'un organe respectif (115) de déplacement linéaire est rattaché audit piètement (111) en un point, de manière articulée, avec l'un (115) des organes voisins de déplacement linéaire, et est rattaché audit élément de support (113) en un point, de manière articulée, avec l'autre organe voisin (115) de déplacement linéaire.

9. Dispositif selon la revendication 5 ou 6, **caractérisé par le fait que** l'unité d'actionnement (90) compte au moins trois organes (89, 101, 104) de déplacement linéaire, des moyens, dévolus à la synchronisation du mouvement des côtés longitudinaux de l'élément de support (97), étant interposés entre le piètement (91) et ledit élément de support (97).

10. Dispositif selon la revendication 9, **caractérisé par le fait que** les moyens dévolus à la synchronisation incluent une barre respective de torsion (95), sur les côtés transversaux du piètement (91) et de l'élément de support (97), sachant que des leviers (96, 96') sont implantés avec verrouillage rotatif aux deux extrémités des barres de torsion (95) et que les leviers (96, 96') dudit piètement (91) et dudit élément de support (97), mutuellement associés, sont respectivement reliés par paires de manière articulée.

11. Dispositif selon la revendication 5 ou 6, **caractérisé par le fait que** l'élément de support (130) et le piètement (121) sont reliés l'un à l'autre par l'intermédiaire d'un guide à coulisse (127, 128, 132, 133), le long duquel ledit élément de support (130) peut coulisser par rapport audit piètement (121).

12. Dispositif selon l'une des revendications 1 à 11, **caractérisé par le fait que** le mannequin (17) comporte une réplique biofidèle de la colonne cervicale qui est fixée rigidement au piètement (36, 91, 111, 121) par sa vertèbre inférieure (C7), et sur la vertèbre cervicale supérieure (C1) de laquelle une tête reproduite (19) est installée.

13. Dispositif selon la revendication 12, **caractérisé par le fait que** la colonne cervicale (18) du mannequin (17) comporte, en vue de simuler la musculature des occupants du véhicule, des premiers éléments (40, 41) de longueur variable qui s'étendent le long de la direction de l'étendue longitudinale de ladite colonne cervicale (18) et sont fixés, par leurs extrémités distantes, aux vertèbres (C1 à C7) de ladite colonne cervicale (18) et à la base (39) de la tête reproduite en étant, de préférence, interposés entre ladite base (39) de la tête reproduite et la première et/ou la deuxième vertèbre(s) cervicale(s) (C1, C2).

14. Dispositif selon la revendication 13, **caractérisé par le fait que** les premiers éléments (40, 41) de longueur variable sont munis d'un corps élastique allongé, pouvant être raccourci par imposition d'un étirement transversal.

15. Dispositif selon la revendication 13 ou 14, **caractérisé par le fait que** la colonne cervicale (18) du mannequin (17) comporte des seconds éléments (55) de longueur variable, en vue de simuler la musculature des occupants du véhicule.

16. Dispositif selon la revendication 15, **caractérisé par le fait que** les seconds éléments (55) de longueur variable sont pourvus d'éléments de traction à action élastique, qui s'étendent jusque dans la région de la vertèbre cervicale inférieure (C7) à partir de la région de la base (39) de la tête reproduite (19).

17. Dispositif selon la revendication 15 ou 16, **caractérisé par le fait que** les seconds éléments (55) de longueur variable sont dotés d'éléments de traction qui sont fixés dans la région de la base (39) de la tête reproduite (19), par l'une de leurs extrémités, franchissent la région de la vertèbre cervicale inférieure (C7), et sont ancrés dans des éléments de retenue (65 à 77) par leur autre extrémité.

18. Dispositif selon la revendication 17, **caractérisé par le fait que** les éléments de retenue sont munis d'un élément élastique (72) respectif, doué de propriétés d'élasticité dans la direction des éléments de traction (55).

19. Dispositif selon la revendication 17 ou 18, **caractérisé par le fait que** les éléments de retenue sont ancrés par l'intermédiaire de surfaces (73, 76) à effet de frottement, la coopération par frottement étant réglable, sachant que lesdites surfaces à effet de frottement offrent, de préférence, une réalisation du type presse-étoupe.

20. Dispositif selon l'une des revendications 1 à 19, **caractérisé par le fait que** l'entraînement, dédié au chariot (11), est formé d'un second chariot ou d'une masse mise en mouvement, de préférence une masse (88) à mouvement oscillant ou pendulaire.

21. Dispositif selon l'une des revendications 1 à 20, **caractérisé par le fait que** l'entraînement dédié au chariot (11) inclut un moteur (30), de préférence un entraînement synchrone ou un moteur linéaire relié audit chariot (11) par l'intermédiaire d'un élément (29, 26) transmetteur de forces.

22. Dispositif selon l'une des revendications 1 à 21, **caractérisé par le fait qu'**un chariot de freinage (51), sur lequel le chariot (11) monte au cours de son mouvement, est placé dans la direction (X) du guide rectiligne (22) dudit chariot (11).

23. Dispositif selon l'une des revendications 1 à 22, **caractérisé par le fait qu'**un appui-tête (14) est implanté sur le chariot (11), derrière le mannequin (17).
